# EUROPEAN PATENT SPECIFICATION

(11) **EP 2 234 309 B1**
(45) Date of publication and mention of the grant of the patent: **14.09.2016**
(21) Application number: 10150587.3
(22) Date of filing: 12.01.2010
(51) Int. Cl.: H04B 7/155, H04L 1/16, H04L 1/18, H04L 1/00, H04W 28/06, H04W 84/04

(54) **RETRANSMISSION METHOD, WIRELESS COMMUNICATION APPARATUS, AND RELAY STATION**
ÜBERTRAGUNGSVERFAHREN, DRAHTLOSE KOMMUNIKATIONSVORRICHTUNG UND RELAISSTATION
PROCÉDÉ DE RETRANSMISSION, APPAREIL DE COMMUNICATION SANS FIL, ET STATION DE RELAIS

(30) Priority: 24.03.2009 JP 2009072180
(43) Date of publication of application: 29.09.2010
(73) Proprietor: FUJITSU LIMITED, Kawasaki-shi, Kanagawa 211-8588 (JP)
(72) Inventor: Hasegawa, Tsuyoshi, Kawasaki-shi Kanagawa 211-8588 (JP)
(74) Representative: Wilding, Frances Ward

(56) References cited:
- US-A1- 2008 320 354

## Description

### FIELD

The embodiments discussed herein are related to a retransmission method, a wireless communication apparatus, and a relay station performing data communication.

### BACKGROUND

To comply with the fourth-generation mobile phone standards (4G), frequency aggregation in which wide bandwidth is established by bundling bands is under investigation. For example, a method of establishing a downlink bandwidth having a total of 100 MHz by simultaneously using a 10 MHz-wide band at the center band of 800 MHz, a 30 MHz-wide band at a band of 2 GHz, and a 60 MHz-wide band at a band of 4 GHz is under investigation.

Because the propagation distance of radio waves decreases as frequency thereof increases, introduction of a relay station (RS) has been considered for use in 4G in which high frequency is also used. It is expected that use of RS will expand the area covered by a base transceiver station (BTS) at a low cost.

Moreover, a technique for adjusting transmission output of base station ACK/NAK messages in a wireless communication system has been disclosed (for example, Japanese Patent Application Publication No. 2007-502052). Furthermore, a technique for controlling a narrow band channel (for example, Japanese Laid-open Patent Publication No. H10-257097) in an indoor wireless communication system in which various kinds of communication demands such as sound and data are transmitted sharing an identical wide band channel has been disclosed.

Further, a technique has been disclosed for simply and effectively suppressing the influence of multipath involving the use of first interference-component estimating circuits respectively for each carrier frequency to estimate interference components from received signals of each carrier; removal of a noise component by an adder, based on a result of estimation; and correction of a transfer function by optimized filtering (see, for example, Japanese Laid-open Patent Publication No. H7-66739).

However, in the conventional techniques described above, the transmission of data is delayed when retransmission processing of data is performed. For example, if retransmission processing of data is performed and transmission of data is delayed in streaming of multimedia content, real time communication of multimedia content is not maintained.

Another known method is disclosed in US2008/0320354.

### SUMMARY

It is considered desirable to solve or at least ameliorate the above problems in the conventional technologies.

According to an aspect of an embodiment, a retransmission method in a mobile communication system is disclosed in claim 1.

### BRIEF DESCRIPTION OF DRAWINGS

FIG. 1 is a block diagram of a communication system according to a first embodiment;
FIG. 2 is a block diagram of a modification of the communication system depicted in FIG. 1;
FIG. 3 is a block diagram of a communication system according to a second embodiment;
FIG. 4 is a flowchart of one example of operation of a BTS depicted in FIG. 3;
FIG. 5 is a flowchart of an example of operations performed by an MS depicted in FIG. 3;
FIG. 6 is a diagram of an example of operation of the communication system depicted in FIG. 3;
FIG. 7 is a block diagram of a communication system according to a third embodiment;
FIG. 8 is a flowchart of one example of operation of an MS depicted in FIG. 7;
FIG. 9 is a diagram of an example of operation of the communication system depicted in FIG. 7;
FIG. 10 is a block diagram of a communication system according to a fourth embodiment;
FIG. 11 is a flowchart of one example of operation of each RS depicted in FIG. 10;
FIG. 12 is a diagram of an example of the operation of the communication system depicted in FIG. 10;
FIG. 13 is one example of operation by a communication system according to a fifth embodiment;
FIG. 14 is a block diagram of a communication system according to a sixth embodiment;
FIG. 15 is a block diagram of a communication system according to a seventh embodiment;
FIG. 16 is a block diagram of a communication system according to an eighth embodiment;
FIG. 17 is a flowchart of one example of operation of an MS depicted in FIG. 16;
FIG. 18 is a diagram of an example of operation of the communication system depicted in FIG. 16;
FIG. 19 is a block diagram of a communication system according to a ninth embodiment;
FIG. 20 is a flowchart of an example of operations performed by an MS depicted in FIG. 19;
FIG. 21 is a diagram of an example of operation of the communication system depicted in FIG. 19;
FIG. 22 is a block diagram of a communication system according to a tenth embodiment;
FIG. 23 is a flowchart of one example of operation of an RS depicted in FIG. 22;
FIG. 24 is a flowchart of one example of operation of a BTS depicted in FIG. 22;
FIG. 25 is a diagram of an example of operation of the communication system depicted in FIG. 22;
FIG. 26 is a block diagram of a communication system according to an eleventh embodiment;
FIG. 27 is a flowchart of an example of operations performed by an RS depicted in FIG. 26;
FIG. 28 is a diagram of an example of operation of the communication system depicted in FIG. 26; and
FIG. 29 is a graph depicting throughput of data in the communication system.

### DESCRIPTION OF EMBODIMENTS

Preferred embodiments of the present invention will be explained with reference to the accompanying drawings.

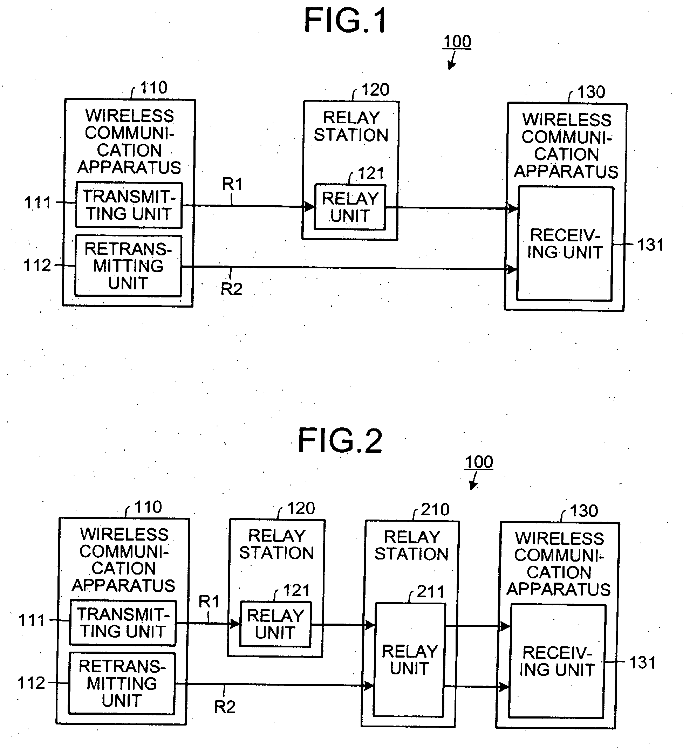

FIG. 1 is a block diagram of a communication system according to a first embodiment. As depicted in FIG. 1, a communication system 100 according to the first embodiment includes a wireless communication apparatus 110, a relay station 120, and a wireless communication apparatus 130. The wireless communication apparatus 110 transmits data to the wireless communication apparatus 130 by wireless communication.

Moreover, the wireless communication apparatus 110 and the wireless communication apparatus 130 are able to use more than one route to communicate data with each other. For example, the wireless communication apparatus 110 and the wireless communication apparatus 130 may use a first route R1 in which data is communicated through the relay station 120, and a second route R2 in which data is communicated without passing through the relay station 120.

The wireless communication device 110 has a transmitting unit 111 and a retransmitting unit 112. The transmitting unit 111 performs a first transmission of data to the wireless communication apparatus 130 by using wireless relaying through the relay station 120 (the first route R1). In this case, the transmitting unit 111 sends data addressed to the wireless communication apparatus 130, to the relay station 120. The first transmission is a transmission of the data to the wireless communication apparatus 130 performed for the first time, for example.

The retransmitting unit 112 performs retransmission processing of the data transmitted via the first transmission by the transmitting unit 111. For example, the retransmitting unit 112 performs retransmission processing of the data when an error occurs in the first transmission by the transmitting unit 111. The retransmitting unit 112 performs the retransmission processing of the data transmitted via the first transmission by the transmitting unit 111, without passing through any relay station (e.g., the relay station 120) (the second route R2).

The retransmission processing is, for example, a retransmission of data so that the wireless communication apparatus 130 is able to properly receive the data in which an error has occurred during the first transmission thereof. For example, in the retransmission processing, the data transmitted via the first transmission is retransmitted. The retransmission processing may be performed on a part (for example, a part corresponding to the error) of the data transmitted via the first transmission, or data including the data that has been transmitted via the first transmission.

The relay station 120 wirelessly relays the first transmission of data from the wireless communication apparatus 110 to the wireless communication apparatus 130. For example, the relay station 120 has a relay unit 121. The relay unit 121 receives data transmitted from the wireless communication apparatus 110. The relay unit 121 then transmits the received data to the wireless communication apparatus 130. The relay unit 121 does not relay retransmission of data from the wireless communication apparatus 110 to the wireless communication apparatus 130.

The wireless communication apparatus 130 has a receiving unit 131. The receiving unit 131 receives the data transmitted through the relay station 120 from the wireless communication apparatus 110. The receiving unit 131 also receives data that is retransmitted from the wireless communication apparatus 110 and does not pass through the relay station 120.

FIG. 2 is a block diagram of a modification of the communication system depicted in FIG. 1. Like reference characters refer to like parts in FIGs. 1 and 2, and explanation therefor is omitted. As depicted in FIG. 2, the wireless communication apparatus 110 and the wireless communication apparatus 130 use the first route R1 in which data is communicated through the relay station 120 and a relay station 210, and the second route R2 in which data is communicated without passing through the relay station 120 but passes through the relay station 210.

The transmitting unit 111 performs the first transmission of data to the wireless communication apparatus 130 by using wireless relaying through the relay station 120 and the relay station 210 (the first route R1). For example, the transmitting unit 111 sends data addressed to the wireless communication apparatus 130, to the relay station 120.

The retransmitting unit 112 performs retransmission processing of the data transmitted via the first transmission by the transmitting unit 111, through fewer relay stations than the number of relay stations that have wirelessly relayed the data in the first transmission. In the example depicted in FIG. 2, because two relay stations (the relay station 120 and the relay station 210) are used to relay the data in the first transmission, the retransmitting unit 112 performs the retransmission processing of the data by using wireless relaying by the relay station 210 (the second route R2).

The relay unit 121 of the relay station 120 receives data transmitted from the wireless communication apparatus 110, and transmits the received data to the relay station 210. The relay unit 121 does not relay retransmission of data from the wireless communication apparatus 110 to the wireless communication apparatus 130.

The relay station 210 wirelessly relays the first transmission of data from the wireless communication apparatus 110 to the wireless communication apparatus 130. For example, the relay station 210 has a relay unit 211. The relay unit 211 receives data transmitted from the relay station 120, and transmits the received data to the wireless communication apparatus 130. The relay unit 211 relays retransmission of data from the wireless communication apparatus 110 to the wireless communication apparatus 130. For example, the relay unit 211 receives data transmitted from the wireless communication apparatus 110, and transmits the received data to the wireless communication apparatus 130.

Next, one example of hardware configuration of the wireless communication apparatus 110 depicted in FIG. 1 and FIG. 2 will be explained. The transmitting unit 111 and the retransmitting unit 112 of the wireless communication apparatus 110 are implemented by, for example, an information processing means such as a central processing unit (CPU) and a communication interface. A data processing unit (not depicted) of the wireless communication apparatus 110 outputs data to be sent to the wireless communication apparatus 130.

The data output from the data processing unit is written to a memory (not depicted) of the wireless communication apparatus 110. The transmitting unit 111 reads the data written to the memory, and performs the first transmission of the read data. The retransmitting unit 112 reads from the memory, the data transmitted via the first transmission by the transmitting unit 111, and performs retransmission processing for the read data.

The relay unit 121 of the relay station 120 and the relay unit 211 of the relay station 210 are implemented by, for example, an information processing means such as CPU and a communication interface. The relay unit 121 reproduces the data received from the wireless communication apparatus 110 in a digital signal, and transmits the reproduced data to the wireless communication apparatus 130.

Alternatively, the relay unit 121 may be implemented by, for example, an analog amplifier circuit or a waveform shaping circuit, and a communication interface. The relay unit 121 performs analog processing such as amplification and waveform shaping on data received from the wireless communication apparatus 110. The relay unit 121 transmits to the wireless communication apparatus 130, the data subjected to the analog processing.

Next, one example of hardware configuration of the wireless communication apparatus 130 depicted in FIG. 1 and FIG. 2 will be explained. The receiving unit 131 of the wireless communication apparatus 130 is implemented by, for example, an information processing means such as CPU and a communication interface. The receiving unit 131 writes the received data to a memory (not depicted) of the wireless communication apparatus 130. The written data is read by, for example, an information processing unit (not depicted) of the wireless communication apparatus 130 to be processed.

As described, according to the communication system 100 of the first embodiment, retransmission processing of data is performed through less relay stations than the relay stations used in wireless relaying in the first transmission, or without passing through any relay station. This speeds up retransmission processing of data, and can reduce delay in data transmission when retransmission processing occurs.

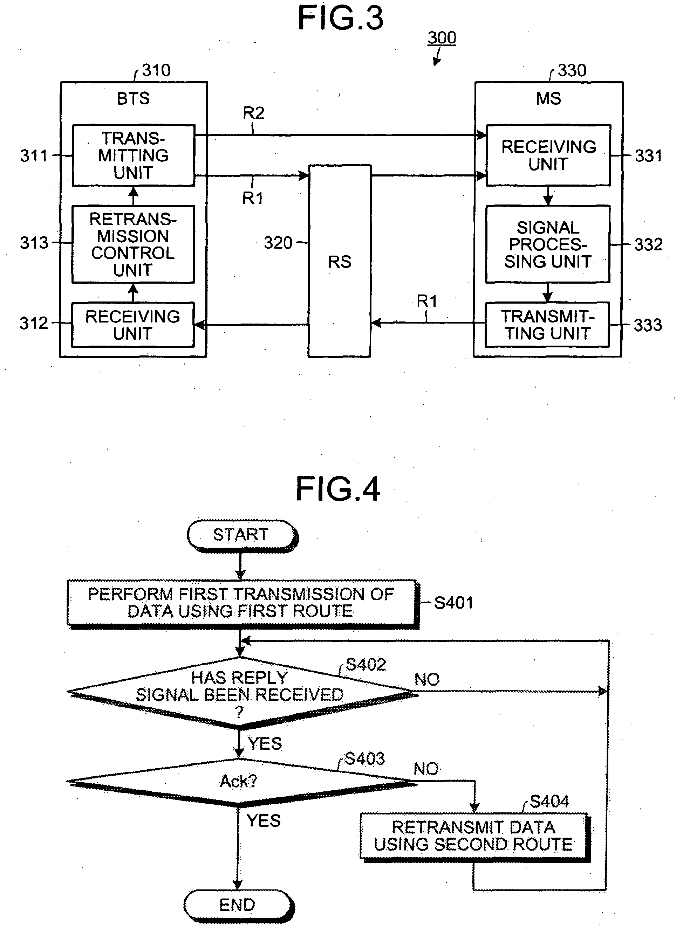

FIG. 3 is a block diagram of a communication system according to a second embodiment. As depicted in FIG. 3, a communication system 300 according to the second embodiment includes a base station (BTS) 310 (first wireless communication apparatus), a relay station (RS) 320, and a mobile station (MS) 330 (second wireless communication apparatus).

The BTS 310 transmits data to the MS 330 by wireless communication. The BTS 310 and the MS 330 may use plural routes to communication data with each other. For example, the BTS 310 and the MS 330 may use the first route R1 in which data is communicated through the RS 320, and the second route R2 in which data is communicated without passing through the RS 320.

The BTS 310 has a transmitting unit 311, a receiving unit 312, and a retransmission control unit 313. The transmitting unit 311 performs the first transmission of data to the MS 330 by the first route R1. For example, the transmitting unit 311, when the first transmission of data to the MS 330 is performed, sends data addressed to the MS 330, to the RS 320. Furthermore, the transmitting unit 311 stores the data transmitted via the first transmission to a memory not depicted.

Additionally, when a retransmission request is output from the retransmission control unit 313, the transmitting unit 311 retransmits, without passing through any relay station, the data transmitted via the first transmission (for example, the RS 320) (the second route R2). For example, the transmitting unit 311 reads the data written to the memory, and directly transmits the read data to the MS 330. Moreover, the transmitting unit 311 performs the first transmission of new data when a transmission request is output from the retransmission control unit 313.

The receiving unit 312 receives a reply signal that is sent from the MS 330 and wirelessly relayed by the RS 320. The reply signal is, for example, either acknowledgement (Ack) indicating that data transmitted from the BTS 310 is properly received by the MS 330, or negative acknowledgement (Nack) indicating that the data is not properly received. The receiving unit 312 outputs the received reply signal (Ack or Nack) to the retransmission control unit 313.

The retransmission control unit 313 controls transmission and retransmission of data by the transmitting unit 311 according to the reply signal output from the receiving unit 312. For example, when Ack is output from the receiving unit 312, the retransmission control unit 313 outputs to the transmitting unit 311, a transmission request indicating that next data should be transmitted. When Nack is output from the receiving unit 312, the retransmission control unit 313 outputs to the transmitting unit 311, a retransmission request indicating that the transmitted data should be retransmitted.

The RS 320 wirelessly relays to the MS 330, the first transmission of data from the BTS 310. The RS 320 does not relay retransmission of data from the BTS 310 to the MS 330. Furthermore, the RS 320 wirelessly relays a reply signal from the MS 330 to the BTS 310.

The MS 330 includes a receiving unit 331, a signal processing unit 332, and a transmitting unit 333. The receiving unit 331 receives data transmitted from the BTS 310 through the RS 320 as the first transmission. Moreover, the receiving unit 331 receives data retransmitted from the BTS 310 without passing through the RS 320. The receiving unit 331 demodulates the received data. The receiving unit 331 outputs the demodulated data to the signal processing unit 332.

The signal processing unit 332 performs signal processing on data output from the receiving unit 331. For example, the signal processing unit 332 performs decoding processing. Further, the signal processing unit 332 detects an error in the data subjected to the decoding processing. The signal processing unit 332 then informs a result of error detection to the transmitting unit 333.

The transmitting unit 333 transmits a reply signal to the BTS 310 according to the result of error detection of the data informed by the signal processing unit 332. For example, when the signal processing unit 332 reports that "there is no error", the transmitting unit 333 transmits Ack to the BTS 310. When the signal processing unit 332 reports that "there is an error", the transmitting unit 333 transmits Nack to the BTS 310.

The transmitting unit 333 transmits a reply signal to the BTS 310, by using wireless relaying by the RS 320 (the first route R1). For example, the transmitting unit 333 transmits to the RS 320, a reply signal addressed to the BTS 310.

Next, one example of hardware configuration of the BTS 310 depicted in FIG. 3 will be explained. The transmitting unit 311 of the BTS 310 is implemented by, for example, an information processing means such as CPU, and a communication interface. A data processing unit (not depicted) of the BTS 310 outputs data to be transmitted to the MS 330.

The data output from the data processing unit is written to a memory (not depicted) of the BTS 310. The transmitting unit 311 reads the data written to the memory, and performs the first transmission of the read data. The transmitting unit 311 reads the data transmitted via the first transmission from the memory, and performs retransmission processing for the read data.

The receiving unit 312 of the BTS 310 is implemented by, for example, an information processing means such as CPU and a communication interface. The receiving unit 312 writes the received reply signal to a memory of the BTS 310. The retransmission control unit 313 of the BTS 310 is implemented by, for example, an information processing means such as CPU. The retransmission control unit 313 controls transmission and retransmission of data by the transmitting unit 311 according to the reply signal written to the memory.

Next, one example of hardware configuration of the MS 330 depicted in FIG. 3 will be explained. The transmitting unit 333 of the MS 330 is implemented by, for example, an information processing means such as CPU and a communication interface. The receiving unit 331 of the MS 330 is implemented by, for example, an information processing means such as CPU, and a communication interface. The receiving unit 331 writes the received data to a memory (not depicted) of the MS 330. The signal processing unit 332 of the MS 330 is implemented by, for example, an information processing means such as CPU. The signal processing unit 332 reads the data written to the memory by the receiving unit 331, and detects an error of the read data.

The signal processing unit 332 writes a result of error detection to the memory. The transmitting unit 333 reads the result of error detection written to the memory by the signal processing unit 332, and transmits to the RS 320, a reply signal according to the read result of error detection.

FIG. 4 is a flowchart of one example of operation of the BTS depicted in FIG. 3. The BTS 310 (START) uses the first route R1 to perform the first transmission of data to the MS 330 via the transmitting unit 311 (step S401). Next, whether the receiving unit 312 has received a reply signal for the data transmitted at step S401 is determined (step S402), and waiting occurs until a reply signal is received (step S402: NO).

When a reply signal is received (step S402: YES), whether the received reply signal is Ack is determined (step S403). If the reply signal is not Ack (step S403: NO), the data is retransmitted by the transmitting unit 311 using the second route R2 (step S404), and the process returns to step S402 to be continued.

If the reply signal is Ack (step S403: YES), a series of processing is ended (END). The data transmitted at step S404 is, for example, the data transmitted at step S401. By repeating the above processing, for example, a series of data is sequentially transmitted to the MS 330.

Because the data is retransmitted using the second route R2 that does not pass through the RS 320 at step S404, the time from the retransmission of the data until the reception of the reply signal at S402 is shortened.

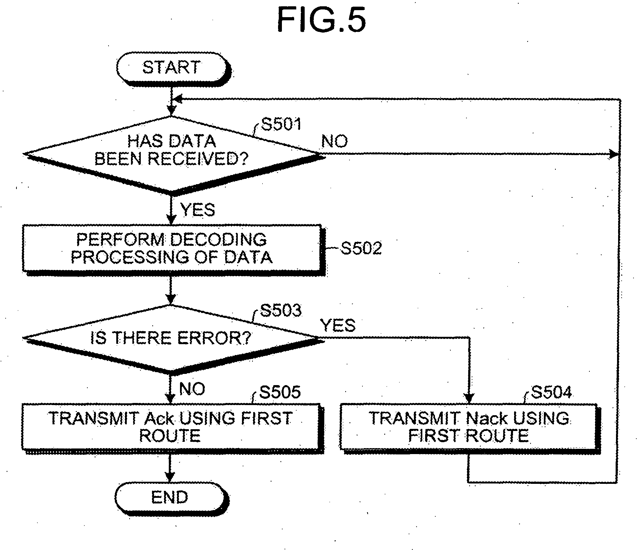

FIG. 5 is a flowchart of an example of operations performed by the MS depicted in FIG. 3. The MS 330 (START) determines whether the receiving unit 331 has received data transmitted from the BTS 310 (step S501), and waiting occurs until data is received (step S501: NO). When the data has been received (step S501: YES), the signal processing unit 332 performs the decoding processing on the received data (step S502).

Next, the signal processing unit 332 determines whether there is an error in the data subjected to the decoding processing (step S503). If there is an error (step S503: YES), the transmitting unit 333 transmits Nack to the BTS 310 using the first route R1 (step S504), and the processing returns to step S501 to be continued.

If there is no error in the data subjected to the decoding processing (step S503: NO), the transmitting unit 333 transmits Ack to the BTS 310 using the first route R1 (step S505), and a series of processing is ended (END). By repeating the above processing, for example, a series of data is received from the BTS 310.

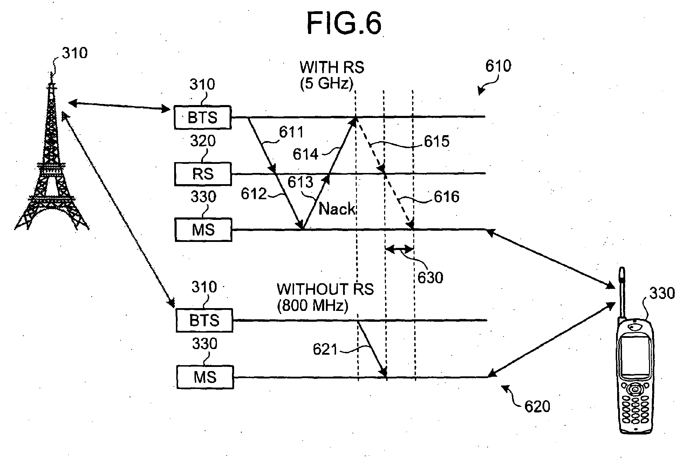

FIG. 6 is a diagram of an example of operation of the communication system depicted in FIG. 3. As depicted in FIG. 6, the BTS 310 and the MS 330 may use two routes of different frequencies to communicate data with each other. One of the two routes is the first route R1 using, for example, a 5 GHz band, and the other of the two routes is the second route R2 using, for example, a 800 MHz band.

The frequency of the first route R1 is high and the propagation distance is short, and therefore, the first route R1 passes through the RS 320 (see FIG. 3). The frequency of second route R2 is low and the propagation distance long, and therefore, the second route R2 does not pass through the RS 320. In a sequence diagram 610 (with RS) and a sequence diagram 620 (without RS), the time axis is common. The sequence diagram 610 depicts transmission and reception of a signal in the first route R1. The sequence diagram 620 depicts transmission and reception of a signal in the second route R2.

In the first route R1, the BTS 310 transmits data to the RS 320 as the first transmission (611). Next, in the first route R1, the RS 320 transmits the data received from the BTS 310 to the MS 330 (612). In this example, it is assumed that an error occurs between the BTS 310 and the RS 320 or between the RS 320 and the MS 330, and as a result, there is an error in the data received by the MS 330.

Subsequently, in the first route R1, the MS 330 transmits Nack to the RS 320 (613). The RS 320 then transmits Nack received from the MS 330 to the BTS 310 (614). Next, in the second route R2, the BTS 310 retransmits the data to MS 330 (621). Thus, the retransmission processing is performed at high speed.

Reference numerals 615 and 616 indicate the flow of data when retransmission of data from the BTS 310 to the MS 330 is performed using the first route R1. When the first route R1 is used for retransmission of data as indicated by reference numerals 615 and 616, it takes time to send data from the BTS 310 to the RS 320 (615), and time (630) to send the data from the RS 320 to the MS 330 (616).

On the other hand, by using the second route R2 for retransmission of data (621), the time indicated by reference numeral 630 is saved because data is retransmitted directly from the BTS 310 to the MS 330. Thus, the retransmission processing is performed at high speed, and delay in data transmission when the retransmission processing is performed is reduced.

As described, according to the communication system 300 of the second embodiment, by performing the retransmission processing using the second route R2 that is faster than the first route R1 by which the first transmission is performed, the retransmission processing is speeded up and delay in data transmission when the retransmission processing is performed is reduced. As depicted in FIG. 3, for example, by setting the first route R1 as a route passing through the RS 320 and the second route R2 as a route not passing through any RS, the second route R2 is a faster route than the first route R1.

Although in this example, a configuration in which the first wireless communication apparatus transmitting data is applied to BTS and the second wireless communication apparatus receiving data is applied to MS has been explained, configuration may be such that the first wireless communication apparatus is applied to MS and the second wireless communication apparatus is applied to BTS.

Moreover, configuration may be such that the first wireless communication apparatus is applied to RS and the second wireless communication apparatus is applied to MS, or that the first wireless communication apparatus is applied to BTS and the second wireless communication apparatus is applied to RS. Furthermore, the first wireless communication apparatus, the relay station, and the second wireless communication apparatus are applicable to wireless communication apparatuses other than BTS, RS, and MS, respectively.

In addition, the MS 330 transmits a retransmission request signal (Nack) of data including an error to the BTS 310 using the first route R1 when there is an error in the data transmitted via the first transmission by the BTS 310. The BTS 310 performs the retransmission processing when the request signal is transmitted by the MS 330. Thus, the BTS 310 performs the retransmission processing of data when an error occurs in data transmitted via the first transmission.

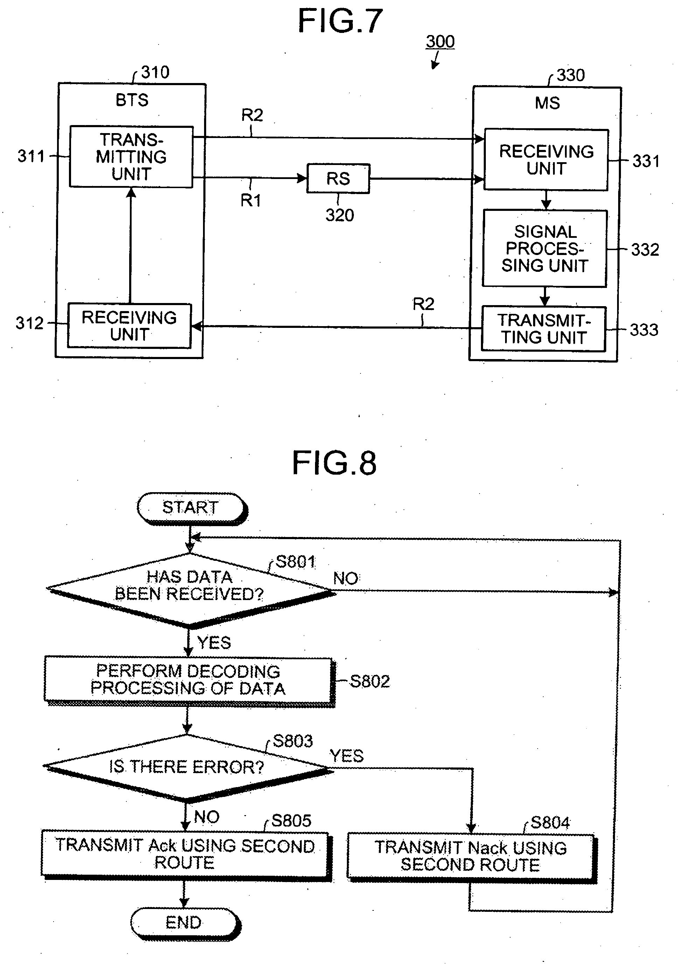

FIG. 7 is a block diagram of a communication system according to a third embodiment. Like reference characters refer to like parts in FIG. 3, and explanation therefor is omitted. In the communication system 300 according to the third embodiment, the transmitting unit 333 of the MS 330 transmits a reply signal to the BTS 310 without passing through the RS 320 (the second route R2).

For example, the transmitting unit 333 of the MS 330 transmits a reply signal to be sent to the BTS 310 directly to the BTS 310. In this case, the receiving unit 312 of the BTS 310 directly receives the reply signal transmitted by the MS 330. An example of operation of the BTS 310 depicted in FIG. 7 is identical to that depicted in FIG. 4, and thus, explanation therefor is omitted.

FIG. 8 is a flowchart of one example of operation of the MS depicted in FIG. 7. Because processing at steps S801 to S803 is identical to that at steps S501 to S503 depicted in FIG. 5, explanation therefor is omitted. At step S803, if there is an error (step S803: YES), the transmitting unit 333 transmits Nack to the BTS 310 using the second route R2 (step S804), and the process returns to step S801 to be continued.

If there is no error in the data subjected to the decoding processing (step S803: NO), the transmitting unit 333 transmits Ack to the BTS 310 using the second route R2 (step S805), and a series of processing is ended (END). By repeating the above processing, for example, a series of data is received from the BTS 310.

Moreover, because Nack is transmitted using the second route R2 that does not pass through the RS 320 at step S804, the time from transmission of Nack to re-reception of data at step S801 is shortened. Furthermore, because Ack is transmitted using the second route R2 that does not pass through the RS 320 at step S805, the time from transmission of Ack until reception of next data at step S801 is shortened.

Although in this example, a case where the second route R2 is used when the MS 330 transmits Ack and when the MS 330 transmits Nack has been explained, configuration may be such that the second route R2 is used when the MS 330 transmits Nack and the first route R1 is used when the MS 330 transmits Ack. In this case as well, the time from transmission of Nack until re-reception of data at step S801 is shortened.

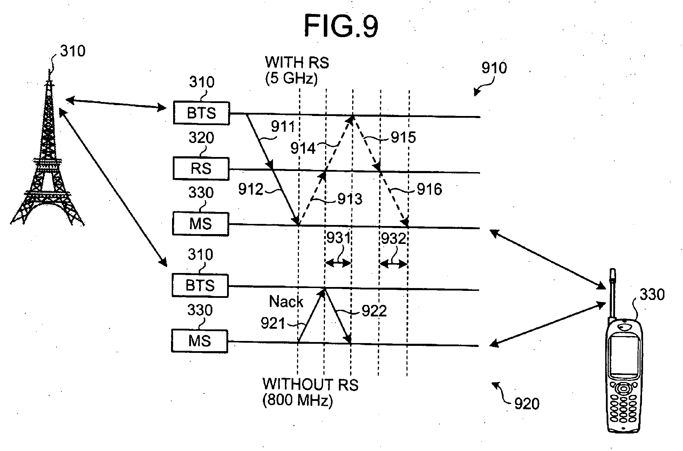

FIG. 9 is a diagram of an example of operation of the communication system depicted in FIG. 7. As depicted in FIG. 9, the BTS 310 and the MS 330 may use two routes of different frequencies to communicate data with each other. One of the two routes is the first route R1 using, for example, a 5 GHz band, and the other of the two routes is the second route R2 using, for example, a 800 MHz band.

The frequency of the first route R1 is high and the propagation distance is short, and therefore, the first route R1 passes through the RS 320 (see FIG. 7). The frequency of second route R2 is low and the propagation distance long, and therefore, the second route R2 does not pass through the RS 320. In a sequence diagram 910 (with RS) and a sequence diagram 920 (without RS), the time axis is common. The sequence diagram 910 depicts transmission and reception of a signal in the first route R1. The sequence diagram 920 depicts transmission and reception of a signal in the second route R2.

In the first route R1, the BTS 310 transmits data to the RS 320 (911). Next, in the first route R1, the RS 320 transmits the data received from the BTS 310 to the MS 330 by wireless transmission (912). In this example, it is assumed that the data received by the MS 330 has an error. Subsequently, in the second route R2, the MS 330 transmits Nack to the BTS 310 (921). The BTS 310 then retransmits the data to MS 330 (922).

Reference numerals 913 to 916 indicate the flow of data when transmission of Nack by the MS 330 and retransmission of data by the BTS 310 are performed using the first route R1. When the first route R1 is used for the transmission of Nack as indicated by reference numerals 913 and 914, it takes time (931) to send Nack from the MS 330 to the RS 320 (913), and time (932) to send Nack from the RS 320 to the BTS 310 (914).

On the other hand, by using the second route R2 for the transmission of Nack (921), the time, as indicated by reference numeral 931, is saved because Nack is transmitted directly from the MS 330 to the BTS 310. Hence, the retransmission processing is performed at high speed, and delay in data transmission when the retransmission processing is performed is reduced.

Moreover, when the first route R1 is used for retransmission of data as indicated by reference numerals 915 and 916, it takes time to send the data from the BTS 310 to the RS 320 (915) and time (932) to send the data from the RS 320 to the MS 330 (916).

On the other hand, by using the second route R2 for retransmission of the data (922), the time indicated by reference numeral 932 is saved because the data is retransmitted directly from the BTS 310 to the MS 330. Thus, the retransmission processing is performed at high speed, and delay in data transmission when the retransmission processing is performed is reduced.

Thus, according to the communication system 300 of the third embodiment, when there is an error in the data transmitted via the first transmission by the BTS 310, a retransmission request signal (Nack) for the data that includes the error is transmitted to the BTS 310 using the second route R2. The BTS 310 performs the retransmission processing when the request signal is transmitted by the MS 330.

Thus, the time taken for transmission of a retransmission request signal (Nack) from the MS 330 to the BTS 330 is shortened. Therefore, according to the communication system 300 of the third embodiment, an effect similar to that of the communication system 300 of the second embodiment is achieved, and delay in data transmission when the retransmission processing occurs is further reduced.

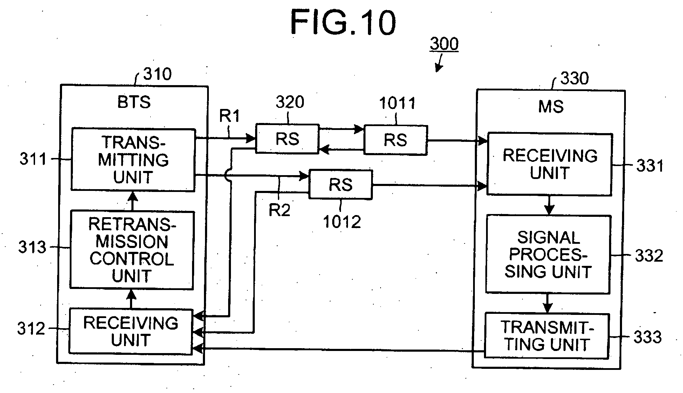

FIG. 10 is a block diagram of a communication system according to a fourth embodiment. Like reference characters refer to like parts in FIG. 3, and explanation therefor is omitted. For example, the BTS 310 and the MS 330 may use the first route R1 (the number of wireless relays: 2) in which data is communicated through the RS 320 and an RS 1011, and the second route R2 (the number of wireless relays: 1) in which data is communicated through an RS 1012.

The RS 320 wirelessly relays to the RS 1011, data that is addressed to the MS 330 and that is transmitted from the BTS 310. The RS 1011 wirelessly relays to the MS 330, the data that is addressed to the MS 330 and that is transmitted from the RS 320. The RS 1012 wirelessly relays to the MS 330, the data that is addressed to the MS 330 and that is transmitted from the BTS 310.

The RS 320, the RS 1011, and the RS 1012 respectively report the number of wireless relays performed therefrom to the MS 330, to the upstream communication apparatus. For example, the RS 320 notifies the BTS 310 of the number of wireless relays from the RS 320 to the MS 330. The RS 1011 notifies the RS 320 of the number of wireless relays from the MS 330 to the RS 1011. The RS 1012 notifies the BTS 310 of the number of wireless relays from the MS 320 to the RS 1012. The notification of the number of wireless relays is performed by using a control channel of a mobile communication network.

The receiving unit 312 of the BTS 310 receives the number of wireless relays reported by the RS 320 as the number of wireless relays of the first route R1. Moreover, the receiving unit 312 receives the number of wireless relays reported by the RS 1012 as the number of wireless relays of the second route R2. The receiving unit 312 outputs to the retransmission control unit 313, the number of wireless relays in the first route R1 and the number of wireless relays in the second route R2.

The retransmission control unit 313 compares the number of wireless relays in the first route R1 and the number of wireless relays in the second route R2 output from the receiving unit 312. The retransmission control unit 313 reports to the transmitting unit 311, the route having less number of wireless relays from among the first route R1 and the second route R2, as the route to be used for retransmission. The transmitting unit 311, using the route reported by the retransmission control unit 313, performs the retransmission processing for data that is transmitted by the transmitting unit 311 by the first transmission.

The reporting of the number of wireless relays by each of the RS 320 to the upstream communication apparatus, the RS 1011, and the RS 1012 is performed, for example, at the time when data from the BTS 310 is wirelessly relayed to the MS 330. To acquire the number of wireless relays for the first route R1 and the second route R2 in this case, for example, the transmitting unit 311 performs the first transmission of the data to the MS 330 using the first route R1 and the second route R2 in the initial operation.

For example, the transmitting unit 311 performs a first transmission of first data to the MS 330 using the first route R1. Further, the transmitting unit 311 performs a first transmission of second data (data following the first data) to the MS 330 using the second route R2. Thus, the BTS 310 is able to acquire the number of wireless relays in the first route R1 and in the second route R2, respectively and selects the route having fewer wireless relays for future retransmission processing.

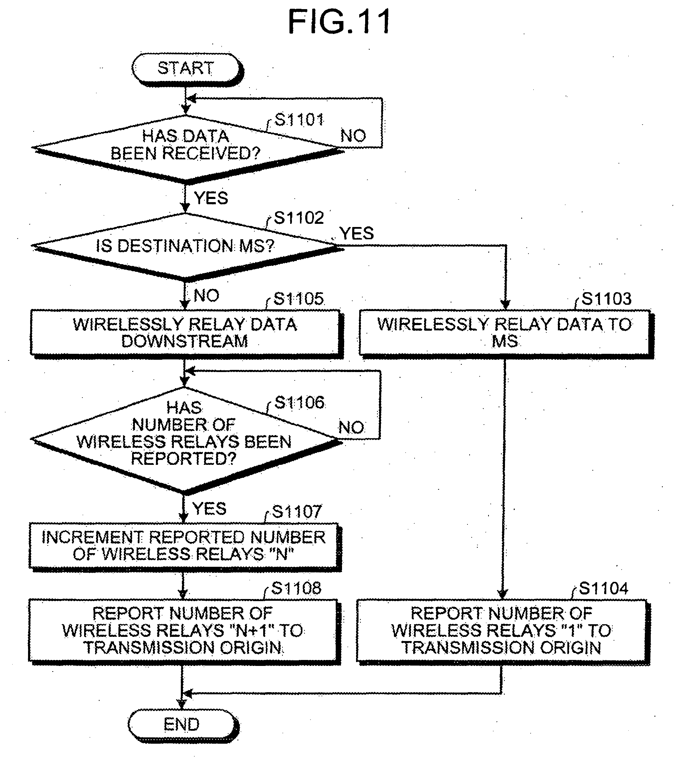

FIG. 11 is a flowchart of one example of operation of each RS depicted in FIG. 10. First (START), whether data that is transmitted from the BTS 310 and that is addressed to the MS 330 has been received is determined (step S1101), and waiting occurs until such data is received (step S1101: NO). When such data has been received (step S1101: YES), whether the destination to which the RS transmits is the MS 330 for the received data is determined (step S1102).

If the destination is the MS 330 (step S1102: YES), the data received at step S1101 is wirelessly relayed to the MS 330 (step S1103). Subsequently, the number of wireless relays "1" is reported to the transmission origin of the data received at step S1101 (step S1104), and a series of processing is ended.

If the destination is not the MS 330 (step S1102: NO), the data received at step S1101 is wirelessly relayed to the downstream apparatus (step S1105). Next, whether the number of wireless relays has been reported by the downstream apparatus at step S1105 is determined (step S1106), and waiting occurs until the number of wireless relays is reported (step S1106: NO).

When the number of wireless relays is reported (step S1106: YES), the reported number of wireless relays "N" is incremented (step S1107). Subsequently, the number of wireless relays "N+1" obtained by the increment at step S1107 is reported to the transmission origin of the data received at step S1101 (step S1108), and a series of processing is ended.

By repeating the above processing by the RS 320, the RS 1011, and the RS 1012 depicted in FIG. 10, respectively, data from the BTS 310 to the MS 330 is wirelessly relayed. In addition, by the above processing, the number of wireless relays in the first route R1 and in the second route R2 is reported to the BTS 310.

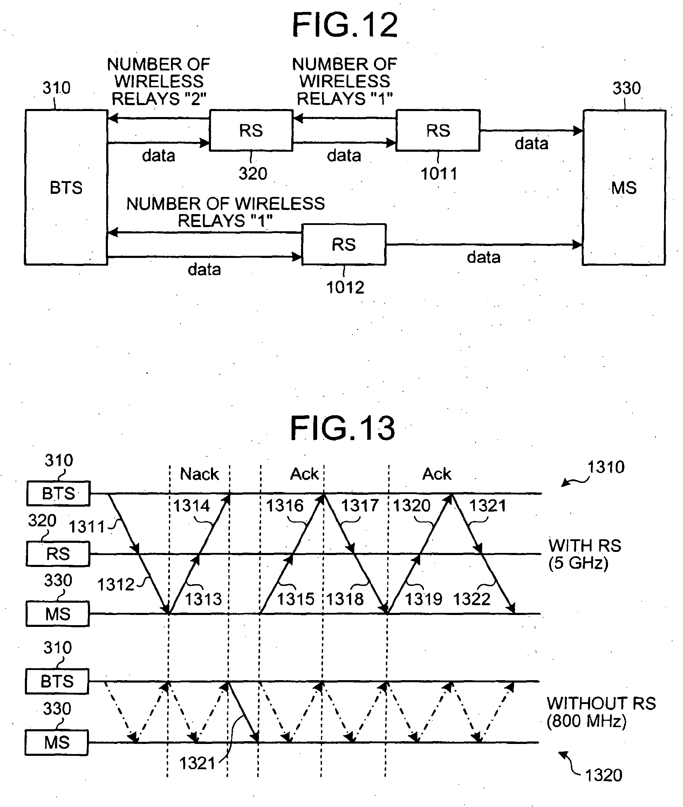

FIG. 12 is a diagram of an example of the operation of the communication system depicted in FIG. 10. Here, the reporting of the number of wireless relays in the first route R1 (via the RS 320 and the RS 1011) depicted in FIG. 10 is explained. The BTS 310 first transmits data to the RS 320. The RS 320 then wirelessly relays the data transmitted from the BTS 310 to the RS 1011.

Next, the RS 1011 wirelessly relays the data transmitted from the RS 320 to the MS 330. Moreover, the RS 1011 reports the number of wireless relays "1" to the transmission origin of the data, the RS 320, because the destination of the received data for the RS 1011 is the MS 330. The RS 320 increments the number of wireless relays "1" reported by the RS 1011, and reports to the BTS 310, the number of wireless relays "2" obtained by the increment. Thus, the BTS 310 obtains the number of wireless relays "2" in the first route R1.

Here, the reporting of the number of wireless relays in the second route R2 (via the RS 1012) depicted in FIG. 10 is explained. The BTS 310 transmits data to the RS 1012. Next, the RS 1012 wirelessly relays to the MS 330, the data transmitted from the BTS 310. Moreover, the RS 1012 reports the number of wireless relays "1" to the transmission origin of the data, the BTS 310, because the destination to which the RS 1012 transmits is the MS 33.0, the destination of the received data.

Thus, the BTS 310 obtains the number of wireless relays "1" in the second route R2. Accordingly, the BTS 310 obtains the respective numbers of wireless relays in the first route R1 and in the second route R2. In this case, the BTS 310, using the second route R2 which has fewer wireless relays than the first route R1, performs the retransmission processing of data transmitted via the first transmission.

As described, according to the communication system 300 of the fourth embodiment, by performing the retransmission processing using the second route R2 which is faster than the first route R1 which is used for the first transmission, the retransmission processing is performed at high speed, and delay in data transmission when the retransmission processing occurs is reduced. For example, as depicted in FIG. 10, by setting a route passing through multiple RS such as the first route R1, and a route passing through fewer RSs than in the first route R1, such as the second route R2, the second route R2 is faster than the first route R1.

In addition, the RS 320, the RS 1011, and the RS 1012 respectively reports the number of wireless relays therefrom to the MS 330, to the relay station or the BTS 310 positioned upstream therefrom, and the BTS 310 performs the retransmission processing of data using the route having fewer reported wireless relays. Thus, the BTS 310 is able to select a route having less RSs than the first route R1 which is used for the first transmission, as the second route R2 to be used for the retransmission processing.

Therefore, an effect similar to the communication system 300 according to the second embodiment is achieved, and the retransmission processing is performed at high speed even when all routes in the system pass through relay stations such as RS, or when there is a route that does not pass through any relay station in the system, but the route is not usable because sufficient communication quality is not guaranteed thereby.

FIG. 13 is one example of operation of a communication system according to a fifth embodiment. As depicted in FIG. 13, the BTS 310 and the MS 330 perform frequency aggregation in which multiple routes at different frequencies are used at the same time, to communicate data with each other. In this case, the configuration of the communication system 300 is similar to that depicted in FIG. 3, and therefore, the illustration thereof is omitted.

As depicted in FIG. 13, the BTS 310 performs the first transmission of data to the MS 330 using, at the same time, the first route R1 that passes through the RS 320 and the second route that does not pass through any RS. For example, the transmitting unit 311 of the BTS 310 allocates each data to be transmitted as the first transmission to the first route R1 and the second route R2. Hereinafter, a link of data allocated to the first route R1 by the transmitting unit 311 is referred to as a first link, and a link of data allocated to the second route R2 is referred to as a second link.

In a sequence diagram 1310 (with RS) and a sequence diagram 1320 (without RS), the time axis is common. The sequence diagram 1310 depicts transmission and reception of a signal in the first route R1. The sequence diagram 1320 depicts transmission and reception of a signal in the second route R2. In the sequence diagram 1310 and the sequence diagram 1320, a solid lined arrow depicts the flow of data of the first link, and an arrow having an alternating long and short dashed lined tail depicts the flow of data of the second link.

As depicted in the sequence diagrams 1310 and 1320, the BTS 310 transmits data of the first link using the first route R1, and data of the second link using the second route R2. Furthermore, the BTS 310, using the first route R1 by interrupting the first transmission of the data of the second link using the second route R2, performs the retransmission processing for the data of the first link for which the first transmission has been performed.

First, the BTS 310 transmits data to the RS 320 by the first route R1 (1311). The RS 320 then transmits the data received from the BTS 310 to the MS 330 (1312). Here, it is assumed that there is an error in the data received by the MS 330, next, the MS 330 transmits Nack to the RS 320 (1313).

Subsequently, the RS 320 transmits the Nack received from the MS 330 to the BTS 310 (1314). The BTS 310 interrupts the transmission of data of the second link that is simultaneously being executed in the second route R2 to perform the retransmission processing of the data of the first link for which the Nack has been received (1321). Here, it is assumed that there is no error in the data retransmitted by the BTS 310 and re-received by the MS 330.

Next, the MS 330 transmits, to the RS 320, Ack for the data received from the BTS 310 (1315). The RS 320 then transmits the Ack received from the MS 330 to the BTS 310 (1316). Subsequently, the BTS 310 transmits new data to the RS 320 (1317). The RS 320 transmits the data received from the BTS 310 to the MS 330 (1318). Here, it is assumed that there is no error in the data received by the MS 330.

Next, the MS 330 transmits, to the RS 320, Ack for the data received from the RS 320 (1319). The operations depicted by reference numerals 1320 to 1322 are similar to those depicted by reference numerals 1316 to 1318, and therefore, the explanation therefor is omitted. By using the second route R2 for retransmission of data (1321), the retransmission processing is performed at high speed, and delay in data transmission when the retransmission processing occurs is reduced.

As described, according to the communication system 300 of the fifth embodiment, the retransmission of data of the first link for which the first transmission has been performed using the first route R1 is performed by interrupting the first transmission of the second link using the second route R2. Thus, the retransmission processing is performed using the second route R2 which is faster than the first route R1 which is used for the first transmission. Therefore, even in a communication system in which the first transmission is performed using multiple routes at the same time (frequency aggregation, etc.), the retransmission processing is performed at high speed, and delay in data transmission when the retransmission processing occurs is reduced.

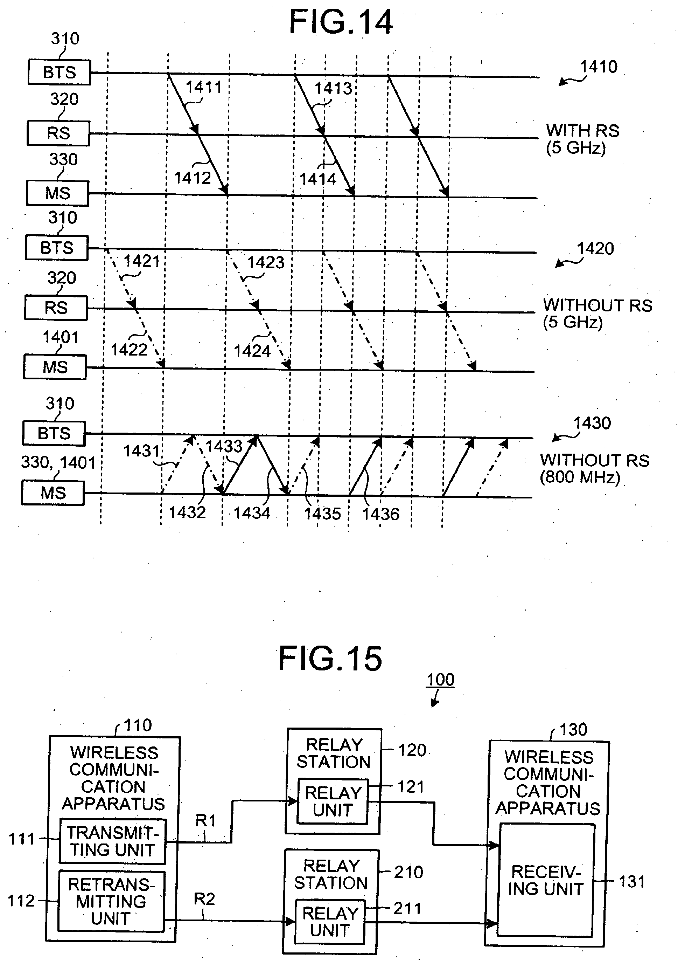

FIG. 14 is a block diagram of a communication system according to a sixth embodiment. In the sixth embodiment, the explanation of points similar to the second embodiment is omitted. In the communication system 300 according to the sixth embodiment, the BTS 310 may be configured to transmit data to the MS 330 and to transmit data to an MS 1401 besides the MS 330.

In this case, the BTS 310 uses the first route R1 when the first transmission is performed and uses the second route R2 when the retransmission processing is performed also for data to be transmitted to the MS 1401. In a sequence diagram 1410 (with RS) and a sequence diagram 1420 (with RS), and a sequence diagram 1430 (without RS), the time axis is common.

In the sequence diagram 1410 and the sequence diagram 1420, a solid lined arrow depicts the flow of a signal between the BTS 310 and the MS 330, and an arrow having an alternating long and short dashed lined tail depicts the flow of a signal between the BTS 310 and the MS 1401. The sequence diagram 1410 indicates transmission and reception of a signal between the BTS 310 and the MS 330 in the first route R1.

The sequence diagram 1420 indicates transmission and reception of a signal between the BTS 310 and the MS 1401 in the first route R1. The sequence diagram 1430 indicates transmission and reception of a signal between the BTS 310 and the MS 330, and between the BTS 310 and the MS 1401 in the second route R2.

First, the BTS 310 transmits to the RS 320 by the first route R1, data addressed to the MS 1401 (1421). The RS 320 then transmits to the MS 1401, the data received from the BTS 310 (1422). Here, it is assumed that there is an error in the data received by the MS 1401.

Next, in the second route R2, the MS 1401 transmits Nack to the BTS 310 (1431). Subsequently, in the second route R2, the BTS 310 retransmits data to the MS 1401 (1432). Next, in the first route R1, the BTS 310 transmits data addressed to the MS 330 to the RS 320 (1411). The RS 320 then wirelessly relays the data received from the BTS 310 to the MS 330 (1412).

Here, it is assumed that there is an error in the data received by the MS 330. In the second route R2, the MS 330 transmits Nack to the BTS 310 (1433). Subsequently, in the second route R2, the BTS 310 retransmits data to the MS 330 (1434). Here, it is assumed that there is no error in the data received by the MS 330.

Further, at this time, in the first route R1, the BTS 310 transmits data addressed to MS 1401 to the RS 320 (1423). Next, the RS 320 wirelessly relays the data received from the BTS 310 to the MS 1401 (1424). Here, it is assumed that there is no error in the data received by the MS 1401. In the second route R2, the MS 1401 then transmits Ack to the BTS 310 (1435).

Further, at this time, in the first route R1, the BTS 310 transmits data addressed to the RS 320 (1413). The RS 320 then wirelessly relays the data received from the BTS 310 to the MS 330 (1414). Assuming that there is no error in the data received by the MS 330, the MS 330 then transmits, in the second route R2, Ack to the BTS 310 (1436).

Thereafter, the BTS 310 performs the first transmission to the MS 330 and to the MS 1401 using the first route R1 and the retransmission processing to the MS 330 and to the MS 1401 using the second route R2, similarly. Therefore, the communication source of the second route R2 is shared by the retransmission processing between the BTS 310 and the MS 330 and the retransmission processing between the BTS 310 and the MS 1401.

As described, according to the communication system 300 of the sixth embodiment, an effect similar to that of the communication system 300 of the second embodiment is achieved, and the BTS 310 performs the retransmission processing to each MS using the second route R2 in data communication with multiple MSs. Thus, the retransmission processing in communication with each MS is performed at high speed, and delay in data transmission when the retransmission processing occurs is reduced.

FIG. 15 is a block diagram of a communication system according to a seventh embodiment. Like reference characters refer to like parts in FIG. 1, and explanation therefor is omitted. As depicted in FIG. 15, the wireless communication apparatus 110 and the wireless communication apparatus 130 may be configured such that the first route R1 in which data is communicated through the relay station 120 and the second route R2 in which data is communicated through the relay station 210 are used.

The retransmitting unit 112 performs the retransmission processing using the route whose total relay time at a relay station present in the relay route at retransmission of data is shorter than the total relay time at a relay station present in the relay route (the first route R1) at the first transmission of the data by the transmitting unit 111. For example, in the example depicted in FIG. 15, suppose that the relay time of data at the relay station 120 included in the first route R1 is longer than the total relay time of data at the relay station 210 included in the second route R2.

In this case, the retransmitting unit 112, using the second route R2, performs the retransmission processing of data transmitted via the first transmission by the transmitting unit 111. The relay station 120 wirelessly relays, to the wireless communication apparatus 130, the data transmitted from the wireless communication apparatus 110 addressing to the wireless communication apparatus 130.

As described, according to the communication system 100 of the seventh embodiment, the retransmission processing is performed using the route whose total relay time for the respective relay stations in the relay route at retransmission of data is shorter than the total relay time for the respective relay stations in the relay route (the first route R1) for the first transmission of the data. Thus, the retransmission processing is performed at high speed, and delay in data transmission when the retransmission processing occurs is reduced.

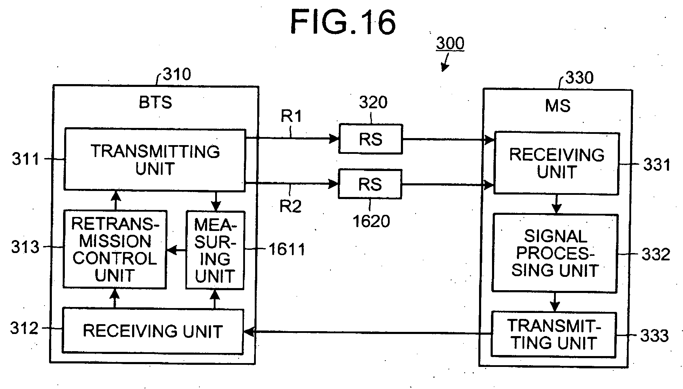

FIG. 16 is a block diagram of a communication system according to an eighth embodiment. Like reference characters refer to like parts in FIG. 3, and explanation therefor is omitted. In the eighth embodiment, for example, the BTS 310 and the MS 330 may be configured such that the first route R1 in which data is communicated through the RS 320 and the second route R2 in which data is communicated through an RS 1620 are used.

The BTS 310 includes a measuring unit 1611 in addition to the components depicted in FIG. 3. The measuring unit 1611 measures the response time from the first transmission by the transmitting unit 311 until the reception of a reply signal in response to the first transmission from the MS 330, for the first route R1 and the second route R2. The measuring unit 1611 outputs the measured response time for each route to the retransmission control unit 313.

The retransmission control unit 313 compares the respective times measured in the first route R1 and the second route R2 and output from the measuring unit 1611. The retransmission control unit 313 reports, to the transmitting unit 311, the route whose measured time is shorter among the first route R1 and the second route R2 as the route to be used for retransmission. The transmitting unit 311, using the route reported by the retransmission control unit 313, performs the retransmission processing for the data transmitted via the first transmission.

Next, the method of measuring response time by the measuring unit 1611 is explained. For example, the transmitting unit 311 outputs a measurement start signal to the measuring unit 1611 when the first transmission is performed. Moreover, the receiving unit 312 outputs a measurement end signal to the measuring unit 1611 when a reply signal from the MS 330 is received. The measuring unit 1611 measures time from the measuring start signal is output from the transmitting unit 311 until the measurement end signal is output from the receiving unit 312, as the response time.

Furthermore, to measure the response time of the first route R1 and the second route R2 by the measuring unit 1611, for example, the transmitting unit 311 of the BTS 310 performs the first transmission of data to the MS 330 using the first route R1 and the second route R2 at the initial operation. For example, the transmitting unit 311 performs the first transmission of first data to the MS 330 using the first route R1.

Further, the transmitting unit 311 performs the first transmission of second data (data following the first data) to the MS 320 using the second route R2. Thus, the measuring unit 1611 obtains the response time for both the first route R1 and the second route R2. Therefore, the BTS 310 selects the route having the shorter response time when retransmission of data is performed after that.

Next, one example of hardware configuration of the measuring unit 1611 of the BTS 310 depicted in FIG. 16 will be explained. The measuring unit 1611 may be implemented by, for example, a communication processing means such as a CPU. The measuring unit 1611 writes the measured response time to a memory (not depicted) of the BTS 310. The retransmission control unit 313 of the BTS 310 reads the response time written to the memory by the measuring unit 1611, and performs retransmission control based on the read response time.

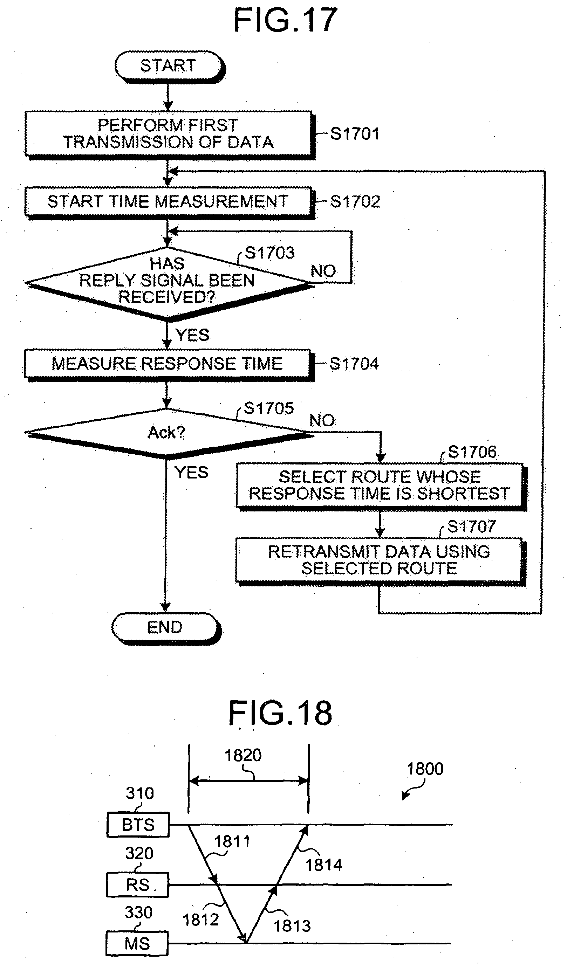

FIG. 17 is a flowchart of one example of operation of the MS depicted in FIG. 16. The BTS 310 (START) uses the first route R1 to perform the first transmission of data to the MS 330 via the transmitting unit 311 (step S1701). Next, the measuring unit 1611 starts time measurement (step S1702).

Next, whether the receiving unit 312 has received a reply signal for the data transmitted at step S1701 is determined (step S1703), and waiting occurs until a reply signal is received (step S1703: NO). When a reply signal is received (step S1703: YES), the measuring unit 1611 measures, as the response time, the time that has elapsed since the start of the time measurement at step S1702 (step S1704).

Subsequently, whether the reply signal received at step S1703 is Ack is determined (step S1705). If the reply signal is not Ack (step S1705: NO), the route whose response time measured at step S1704 is shortest is selected (step S1706).

Next, the transmitting unit 311 retransmits data using the route selected at step S1706 (step S1707), and the process returns to step S1702 to be continued. When the reply signal is Ack (step S1705: YES), a series of processing is ended (END). The data transmitted at step S1707 is, for example, the data transmitted at step S1701.

By repeating the above processing, for examples, a series of data is transmitted to the MS 330. Moreover, because data is retransmitted using the second route R2 in which the RS 320 is not passed through at step S1704, the time from the retransmission of data to the reception of a reply signal at step S1703 is shortened.

Moreover, by measuring the time from step S1701 to step S1704 by the measuring unit 1611, the response time for a route used for the first transmission is measured. Thus, the total relay time in the respective relay stations included in the first route R1 and the total relay time in respective relay stations included in the second route R2 are measured.

FIG. 18 is a diagram of an example of operation of the communication system depicted in FIG. 16. A sequence diagram 1800 depicts transmission and reception of a signal in the first route R1. First, the BTS 310 transmits data to the RS 320 (1811). The RS 320 then wirelessly relays to the MS 330, the data transmitted from the BTS 310 (1812).

Next, the MS 330 transmits a reply signal to the RS 320 (1813). The RS 320 then transmits the reply signal received from the MS 330 to the BTS 310 (1814). The measuring unit 1611 of the BTS 310 measures the time 1820 from the transmission of data from the BTS 310 to the MS 330 (1811) until the reception of the reply signal from the MS 330 by the BTS 310 (1814).

As described, according to the communication system 300 of the eighth embodiment, by performing the retransmission processing using the second route R2 which is faster than the first route R1 which is used for the first transmission, the retransmission processing is performed at high speed, and delay in data transmission when the retransmission processing occurs is reduced. For example, as depicted in FIG. 16, by measuring the response time of each route, and by setting the route whose measured time is shortest as the second route R2, the second route R2 is the faster route than the first route R1.

Furthermore, the time 1820 from the transmission of data to the MS 330 by the BTS 310 (1811) until the reception of a reply signal from the MS 330 by the BTS 310 (1814) is measured. Thus, the response time for each route is measured. Therefore, the BTS 310 is able to select, as the second route R2 to be used for the retransmission processing, a route having a shorter response time than the first route R1 which is used for the first transmission.

Therefore, an effect similar to that of the communication system 300 according to the second embodiment is achieved, and the retransmission processing is performed at high speed even when a route that does not pass through any relay station such as RS is not present in the system, or when a route that does not through any relay station is present, but is not usable because sufficient communication quality is not guaranteed thereby.

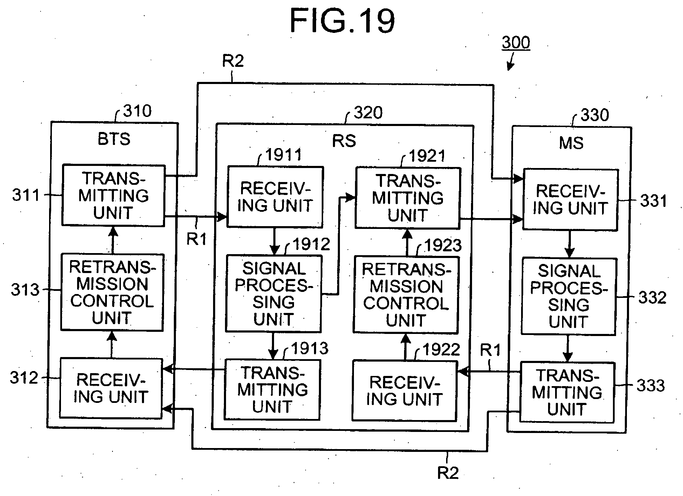

FIG. 19 is a block diagram of a communication system according to a ninth embodiment. Like reference characters refer to like parts in FIG. 3, and explanation therefor is omitted. In the communication system 300 according to the ninth embodiment, the retransmission control is performed independently between the BTS 310 and the RS 320, and between the RS 320 and the MS 330.

The transmitting unit 311 performs the first transmission of data to the MS using, at the same time, the first route R1 that passes through the RS 320 and the second route R2 that does not pass through any RS. For example, the transmitting unit 311 allocates data to be transmitted as the first transmission to the first route R1 and the second route R2. Hereinafter, a link of data allocated to the first route R1 by the transmitting unit 311 is referred to as the first link, and a link of data allocated to the second route R2 is referred to as the second link.

The transmitting unit 311 transmits data to the RS 320 when data of the first link is transmitted. The transmitting unit 311 transmits data directly to the MS 330 when data of the second link is transmitted. Furthermore, the transmitting unit 311 retransmits, without passing through any relay station (for example, the RS 320) (the second route R2), the data that is transmitted via the first transmission when a retransmission request is output from the retransmission control unit 313. Further, the transmitting unit 311 performs the first transmission of new data when a transmission request is output from the retransmission control unit 313.

The RS 320 has a function of performing retransmission control between the RS 320 and the MS 330. For example, the RS 320 includes a receiving unit 1911, a signal processing unit 1912, a transmitting unit 1913, a transmitting unit 1921, a receiving unit 1922, and a retransmission control unit 1923. The receiving unit 1911 receives data transmitted from the BTS 310 as the first transmission. The receiving unit 1911 performs decoding processing on the received data, and outputs the data subjected to the decoding processing to the signal processing unit 1912.

The signal processing unit 1912 performs signal processing on the data output from the receiving unit 1911. For example, the signal processing unit 1912 performs decoding processing of the data output from the receiving unit 1911. Moreover, the signal processing unit 1912 detects an error in the data subjected to the decoding processing, and reports the result of detection to the transmitting unit 1913. The signal processing unit 1912 stores the data subjected to the signal processing to a buffer (not depicted) of the RS 320 when there is no error in the data.

The transmitting unit 1913 transmits a reply signal to the BTS 310 according to the result of detection reported by the signal processing unit 1912. For example, the transmitting unit 1913 transmits Ack to the BTS 310 when it is reported that "there is no error" by the signal processing unit 1912. The transmitting unit 1913 transmits Nack to the BTS 310 when it is reported that "there is an error" by the signal processing unit 1912.

The transmitting unit 1921 reads the data stored to a transmission buffer of the RS 320 by the signal processing unit 1912. The transmitting unit 1921 then transmits the read data to the MS 330 as the first transmission. Furthermore, the transmitting unit 1921 stores the data transmitted via the first transmission to a memory not depicted.

The transmitting unit 1921 retransmits the data transmitted via the first transmission when a retransmission request is output from the retransmission control unit 1923. For example, the transmitting unit 1921 reads the data stored to the memory, and transmits the read data to the MS 330. Further, the transmitting unit 1921 performs the first transmission of next data output from the signal processing unit 1912 when a transmission request is output from the retransmission control unit 1923.

The receiving unit 1922 receives a reply signal transmitted by the MS 330. The reply signal is for example, either Ack indicating that the data transmitted from the RS 320 is properly received by the MS 330, or Nack indicating that the data is not properly received. The receiving unit 1922 outputs the received reply signal to the retransmission control unit 1923.

The retransmission control unit 1923 controls retransmission of data by the transmitting unit 1921. For example, when Ack is output from the receiving unit 1922, the retransmission control unit 1923 deletes data corresponding to Ack from the transmission buffer, and outputs a transmission request for next data to the transmitting unit 1921. On the other hand, when Nack is output from the receiving unit 1922, the retransmission control unit 1923 outputs a retransmission request for the transmitted data to the transmitting unit 1921.

The signal processing unit 332 of the MS 330 reports the result of data error detection to the transmitting unit 333, and further reports which among the first route R1 and the second route R2 is used to transmit the data, to the transmitting unit 333.

The transmitting unit 333 of the MS 330 transmits Ack to the RS 320 when the result of detection is received from the signal processing unit 332 for the data transmitted by the first route R1 regardless of the result of detection indicating "there is an error" or "there is no error". The transmitting unit 333 of the MS 330, using the second route R2, transmits Ack to the BTS 310 when the result of detection is "there is no error" and using the second route R2, transmits Nack when the result of detecting is "there is an error".

Furthermore, when the result of detection for the data transmitted using the second route R2 is received from the signal processing unit 332, the transmitting unit 333 transmits a reply signal to the BTS 310 according to the result of detection using the second route R2. For example, when it is reported that "there is no error" from the signal processing unit 332, the transmitting unit 333 transmits Ack to the BTS 310. When it is reported that "there is an error" from the signal processing unit 332, the transmitting unit 333 transmits Nack to the BTS 310.

Next, one example of hardware configuration of the RS 320 depicted in FIG. 19 will be explained. The receiving unit 1911, the transmitting unit 1913, the transmitting unit 1921, and the receiving unit 1922 of the RS 320 are implemented by, for example, an information processing means such as a CPU and a communication interface. The signal processing unit 1912 and the retransmission control unit 1923 of the RS 320 are implemented by, for example, an information processing means such as a CPU and a communication interface.

The receiving unit 1911 writes received data to a memory of the RS 320. The signal processing unit 1912 reads the data written to the memory by the receiving unit 1911, and performs signal processing of the read data. The signal processing unit 1912 writes the result of error detection and the data to a memory of the RS 320. The transmitting unit 1913 transmits a reply signal according to the result of detection written to the memory of the RS 320 by the signal processing unit 1912.

The transmitting unit 1921 reads the data written to the memory of the RS 320 by the signal processing unit 1912, and transmits the read data. The receiving unit 1922 writes a received reply signal to the memory of the RS 320. The retransmission control unit 1923 of the RS 320 performs retransmission control according to the reply signal written to the memory by the receiving unit 1922.

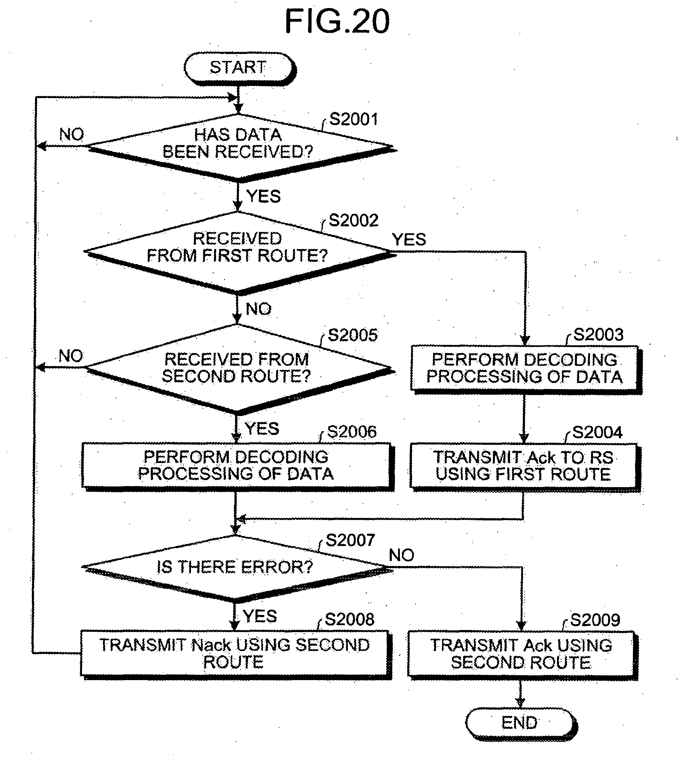

FIG. 20 is a flowchart of an example of operations performed by the MS depicted in FIG. 19. The MS 330 (START) determines whether the receiving unit 331 has received data transmitted through the first route R1 or the second route R2 (step S2001), and waiting occurs until data is received (step S2001: NO). When data is received (step S2001: YES), whether the received data is received from the first route R1 is determined (step S2002).

If the data is received from the first route R1 (step S2002: YES), decoding processing of the data received at step S2001 is performed by the signal processing unit 332 (step S2003). Subsequently, Ack is transmitted to the RS 320 using the first route R1 (step S2004), and the processing proceeds to step S2007 to be continued.

If the data is not received from the first route R1 (step S2002: NO), whether the data received at step S2001 is received from the second route R2 is determined (step S2005). If the data is not received from the second route R2 (step S2005: NO), the processing returns to step S2001 to be continued.

If the data is received from the second route R2 (step S2005: YES), decoding processing of the data received at step S2001 is performed by the signal processing unit 332 (step S2006). Next, the signal processing unit 332 determines whether there is an error in the data subjected to the decoding processing (step S2007).

If there is an error (step S2007: YES), using the second route R2, Nack is transmitted to the BTS 310 (step S2008), a series of processing is ended (END), and the process returns to step S2001 to be continued. If there is no error in the data subjected to the decoding processing (step S2007: NO), using the second route R2, Ack is transmitted to the BTS 310 (step S2009), and a series of processing is ended (END). By repeating the above processing, for example, a series of data is received from the BTS 310.

By repeating the above processing, the MS 330 transmits Ack to the RS 320 regardless of the presence or absence of an error in data when the data is received from the first route R1, and transmits a reply signal according to the presence or absence of an error in the data to the BTS 310. Thus, the RS 320 does not perform retransmission control to the MS 330 even if an error is detected in the data at MS 330, and transmission between the RS 320 and the MS 330 is not interrupted by retransmission control.

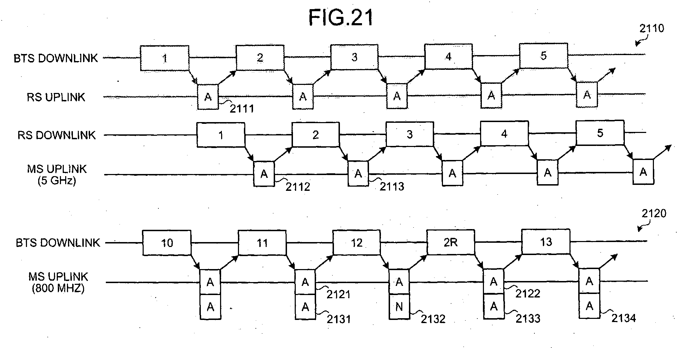

FIG. 21 is a diagram of an example of operation of the communication system depicted in FIG. 19. In FIG. 21, a sequence diagram 2110 depicts transmission and reception of a signal in the first route R1. A sequence diagram 2120 depicts transmission and reception of a signal in the second route R2. In the sequence diagram 2110 and the sequence diagram 2120, blocks with numerals indicate data.

As depicted in the sequence diagram 2110, the BTS 310 performs the first transmission of data "1" to data "5" by the first route R1. As depicted in the sequence diagram 2120, The BTS 310 performs the first transmission of data "10" to data "13" by the second route R2. "A" indicates Ack, and "N" indicates Nack.

For example, Ack indicated by a numeral 2111 is a reply signal to data "1" transmitted by the RS 320 to the BTS 310. Ack indicated by a numeral 2112 is a reply signal to data "1" transmitted by the MS 330 to the RS 320. Ack indicated by a numeral 2121 is a reply signal to data "11" transmitted by the MS 330 to the BTS 310.

Here, it is assumed that the MS 330 detects an error of received data "2". In this case, the MS 330 transmits Ack to the RS 320 (2113). Moreover, the MS 330 transmits Nack to the BTS 310 (2132). Thus, the BTS 310 transmits retransmission data "2R" of data "2" to the MS 330 using the second route R2.

Ack indicated by a numeral 2133 is a reply signal to data "3" transmitted by the MS 330 to the BTS 310. Ack indicated by a numeral 2134 is a reply signal to data "4" transmitted by the MS 330 to the BTS 310. Ack indicated by a numeral 2122 is a reply signal to retransmission data "2R" transmitted by the MS 330 to the BTS 310.

As described, according to the communication system 300 of the ninth embodiment, an effect similar to that of the communication system 300 according to the second embodiment is achieved, and the RS 320 has a function of performing retransmission control between the RS 320 and the MS 330. Furthermore, the MS 330 transmits a retransmission request signal for data that has an error to the BTS 310 when there is an error in the data transmitted via the first transmission, and transmits Ack to the RS 320 regardless of presence of an error in the data.

Thus, the RS 320 does not perform retransmission control to the MS 330 even if an error is detected in data at MS 330, and transmission between the RS 320 and the MS 330 is not interrupted by retransmission control. Therefore, even if the transmission speed between the RS 320 and the MS 330 is slower than the transmission speed between the BTS 310 and the RS 320, reduction in throughput because of transmission between the RS 320 and the MS 330 being bottlenecked or buffer overflow at the RS 320 is prevented.

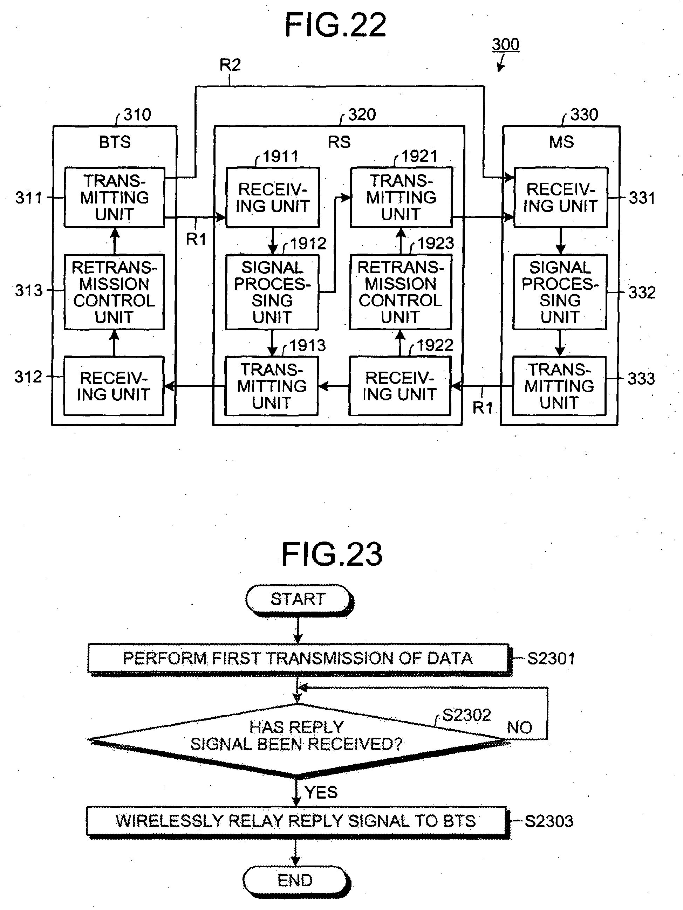

FIG. 22 is a block diagram of a communication system according to a tenth embodiment. Like reference characters refer to like parts in FIG. 19, and explanation therefor is omitted. The transmitting unit 311 of the BTS 310 performs, simultaneously, the first transmission of data to the MS 330 using the first route R1 which passes through the RS 320 and the second route R2 which does not pass any RS.

Furthermore, the transmitting unit 333 of the MS 330 transmits a reply signal to the RS 320 according to the result of detection reported by the signal processing unit 332. For example, the transmitting unit 333 transmits Ack to the RS 320 when it is reported that "there is no error" from the signal processing unit 332, and transmits Nack to the RS 320 when it is reported that "there is an error" from the signal processing unit 332.

When the reply signal is received from the MS 330, the receiving unit 1922 of the RS 320 outputs the received reply signal to the transmitting unit 1913. The transmitting unit 1913 transmits to the BTS 310, the reply signal output from the receiving unit 1922. When the reply signal is received from the MS 330, the receiving unit 1922 transmits Ack to the retransmission control unit 1923 regardless of the contents of the reply signal.

When Nack for the first link is output from the receiving unit 312, the retransmission control unit 313 of the BTS 310 outputs to the transmitting unit 311, a retransmission request for the first link. When Nack for the second link is output from the receiving unit 311, the retransmission control unit 313 outputs to the transmitting unit 311, a retransmission request for the second link.

When the retransmission request for the first link is output from the retransmission control unit 313, the transmitting unit 311 retransmits, without passing through any relay stations, the data of the first link that has been transmitted via the first transmission (the second route R2). Moreover, when the retransmission request for the second link is output from the retransmission control unit 313, the transmitting unit 311 retransmits, without passing through any relay stations, the data of the second link that has been transmitted via the first transmission (the second route R2).

FIG. 23 is a flowchart of one example of operation of the RS depicted in FIG. 22. The RS 320 (START) performs the first transmission of data received from the BTS 310 via the transmitting unit 1921 (step S2301). Next, whether the receiving unit 1922 has received a reply signal for the data transmitted at step S2301 is determined (step S2302), and waiting occurs until a reply signal is received (step S2302: NO).

When a reply signal is received (step S2302: YES), the transmitting unit 1913 wirelessly relays the received reply signal to the BTS 310 (step S2303), and a series of processing is ended (END). By repeating the above processing, the RS 320 wirelessly relays a reply signal from the MS 330 to the BTS 310 regardless of the contents of the reply signal. Thus, it can be arranged such that the RS 320 does not perform retransmission control to the MS 330 even when an error is detected in data at the MS 330.

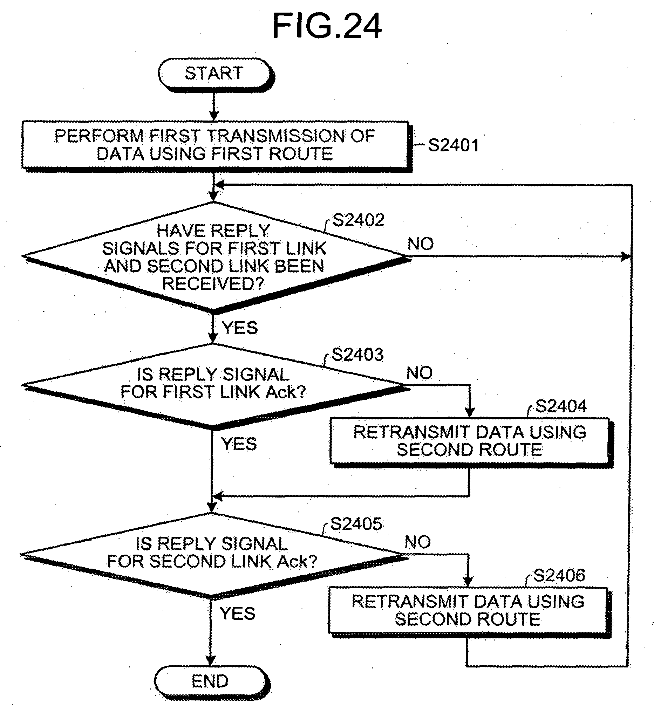

FIG. 24 is a flowchart of one example of operation of the BTS depicted in FIG. 22. The BTS 310 (START) uses the first route R1 to perform the first transmission of data to the MS 330 via the transmitting unit 311 (step S2401). Next, whether the receiving unit 312 has received a reply signal for the first link and the second link is determined (step S2402), and waiting occurs until a reply signal is received (step S2402: NO).

When respective reply signals are received (step S2402: YES), whether the reply signal for the first link among the received reply signals is Ack is determined by the retransmission control unit 313 (step S2403). If the reply signal of the first link is Ack (step S2403: YES), the processing proceeds to step S2405 to be continued.

If the reply signal of the first link is not Ack (step S2403: NO), the transmitting unit 311 retransmits, using the second route R2, the data of the first link that has been transmitted via the first route R1 (step S2404). Next, whether the reply signal of the second link among the reply signals received at step S2402 is Ack is determined by the retransmission control unit 313 (step S2405).

If the reply signal of the second link is Ack (step S2405: YES), a series of processing is ended (END). If the reply signal of the second link is not Ack (step S2405: NO), the data of the second link that has been transmitted by the first route R1 is retransmitted using the second route R2, (step S2406), and the processing returns to step S2402 to be continued.

By repeating the above processing, when Nack of the first link is received, the BTS 310 performs retransmission control of the first link using the second route R2 by interrupting transmission of data of the second link. Thus, the retransmission control of the first link is performed using the second route R2 even if the RS 320 does not perform retransmission control.

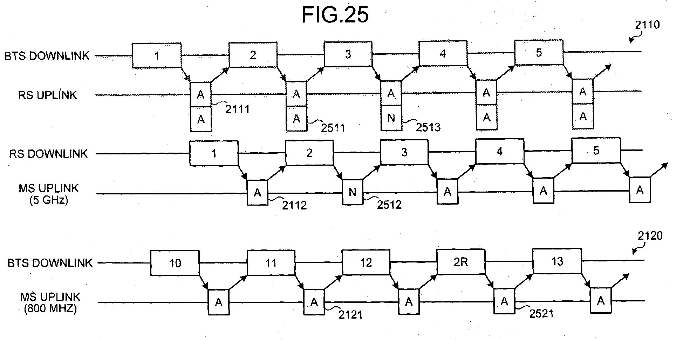

FIG. 25 is a diagram of an example of operation of the communication system depicted in FIG. 22. Like reference characters refer to like parts in FIG. 21, and explanation therefor is omitted. Ack indicated by reference numeral 2511 is Ack (2112) that is transmitted from the MS 330 to the RS 320 and that is further wirelessly relayed by the RS 320 to the BTS 310.

Here, it is assumed that the MS 330 detects an error of received data "2". In this case, the MS 330 transmits Nack to the RS 320 (2512). The RS 320 transmits the Nack received from the MS 330 to the BTS 310 (2513). The BTS 310 transmits, using the second rout R2, retransmission data "R2" of data "2" to the MS 330 (2521).

As described, according to the communication system 300 of the tenth embodiment, an effect similar to that of the communication system 300 according to the second embodiment is achieved, and the RS 320 has a function of performing retransmission control between the RS 320 and the MS 330. Furthermore, the MS 330 transmits a reply signal according to the result of data error detection to the BTS 310 through the RS 320. The RS 320 wirelessly relays the reply signal from the MS 330 to the BTS 310, and outputs Ack to the retransmission control unit 1923 of the RS 320.

Thus, the RS 320 does not perform retransmission control to the MS 330 even if an error is detected in data at MS 330, and transmission between the RS 320 and the MS 330 is not interrupted by retransmission control. Therefore, even if the transmission speed between the RS 320 and the MS 330 is slower than the transmission speed between the BTS 310 and the RS 320, reduction in throughput because of transmission between the RS 320 and the MS 330 being bottlenecked or buffer overflow at the RS 320 is prevented.

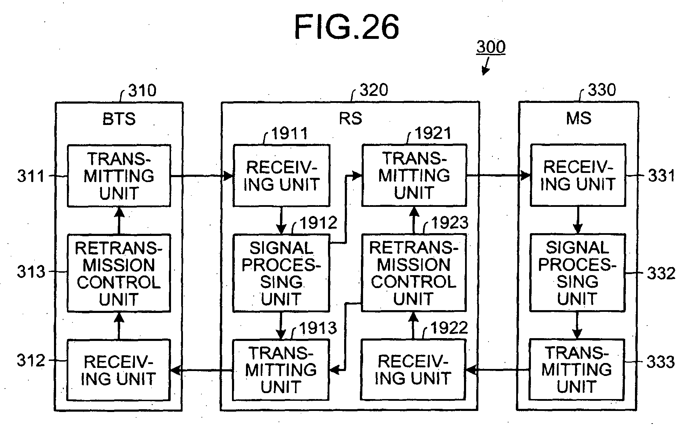

FIG. 26 is a block diagram of a communication system according to an eleventh embodiment. Like reference characters refer to like parts in FIG. 19, and explanation therefor is omitted. In the communication system 300 according to the eleventh embodiment, the retransmission control is performed independently between the BTS 310 and the RS 320, and between the RS 320 and the MS 330.

The BTS 310 and the MS 330 are not limited a configuration that uses multiple routes to communicate data with each other, and may be configured to use a single route to communicate data with each other. For example, the BTS 310 and the MS 330 may communicate data using a route in which data is communicated through the RS 320.

The transmitting unit 311 of the BTS 310 transmits data addressed to the MS 330 to the RS 320 when the first transmission of data to the MS 330 is performed. Moreover, the transmitting unit 311 stores the data transmitted via the first transmission to a memory not depicted.

The transmitting unit 311 retransmits the data transmitted via the first transmission when a retransmission request is output from the retransmission control unit 313. For example, the transmitting unit 311 reads the data stored to the memory, and transmits the read data to the RS 320.

When Ack is output from the receiving unit 1922, the retransmission control unit 1923 of the RS 320 outputs to the transmitting unit 1921, a transmission request for next data. On the other hand, when Nack is output from the receiving unit 1922, the retransmission control unit 1923 outputs to the transmitting unit 1921, a retransmission request for the transmitted data and further outputs to the transmitting unit 1913, a Nack transmission request for transmission of Nack. The transmitting unit 1913 transmits Nack to the BTS 310, when the Nack transmission request is output from the retransmission control unit 1923.

Thus, when Nack is received from the MS 330, the RS 320 performs retransmission control to the MS 330 and transmits Nack to the BTS 310. The receiving unit 1911 discards the data that has been transmitted from the BTS 310 in response to the Nack transmitted from the transmitting unit 1913 based on the Nack transmission request. This prevents repetition of transmission of the same data to the MS 330.

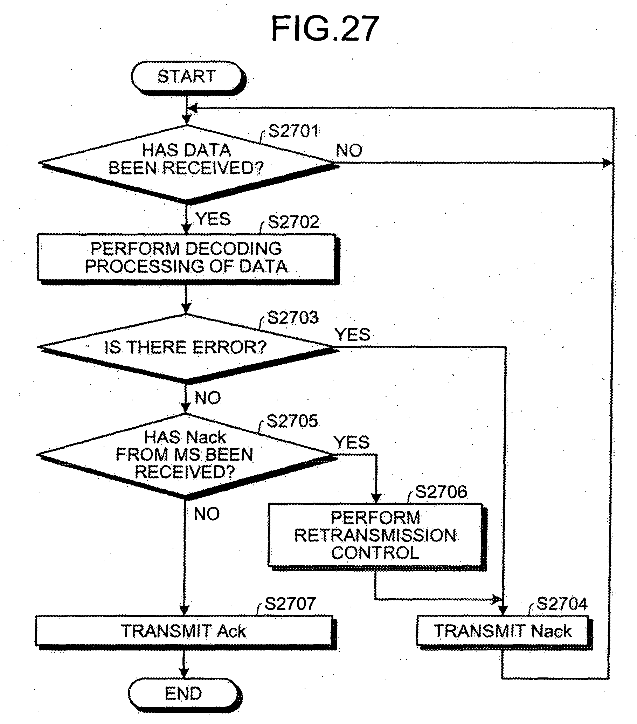

FIG. 27 is a flowchart of an example of operations performed by the RS depicted in FIG. 26. The RS 320 (START) determines whether the receiving unit 1911 has received data transmitted from the BTS 310 (step S2701), and waiting occurs until data is received (step S2701: NO). When the data has been received (step S2701: YES), the signal processing unit 1912 performs the decoding processing on the received data (step S2702).

Next, the signal processing unit 1912 determines whether there is an error in the data subjected to the decoding processing (step S2703). If there is an error (step S2703: YES), the transmitting unit 1913 transmits Nack to the BTS 310 (step S2704), and the processing returns to step S2701 to be continued.

If there is no error (step S2703: NO), the receiving unit 1922 determines whether Nack from the MS 330 is received (step S2705). If Nack from the MS 330 has been received (step S2705: YES), the retransmission processing according to the received Nack is performed by the retransmission control unit 1923 (step S2706), and the processing proceeds to step S2704 to be continued.

If Nack from the MS 330 is not received (step S2705: NO), the transmitting unit 1913 transmits Ack to the BTS 310 (step S2707), and a series of processing is ended (END). By repeating the above processing, when Nack from the MS 330 is received, the RS 320 performs retransmission control according to the Nack and transmits the Nack to the BTS 310.

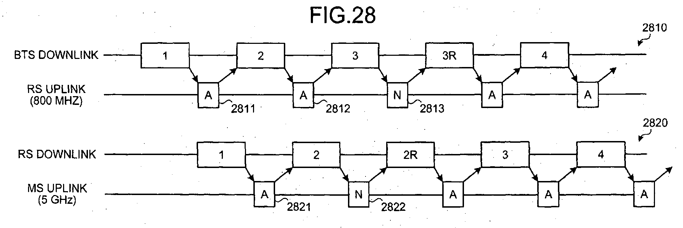

FIG. 28 is a diagram of an example of operation of the communication system depicted in FIG. 26. In FIG. 28, a sequence diagram 2810 depicts transmission and reception of data between the BTS 310 and the MS 330. A sequence diagram 2820 depicts transmission and reception of data between the RS 320 and the MS 330. Blocks with numerals indicate data. Further, "A" indicates Ack, and "N" indicates Nack.

For example, Ack indicated by reference numeral 2811 is a reply signal to data "1" transmitted to the RS 320 by the BTS 310. Ack indicated by reference numeral 2821 is a reply signal to data "1" transmitted by the RS 320 to the MS 330. Ack indicated by reference numeral 2812 is a reply signal to data "2" transmitted by the BTS 310 to the RS 320.

Here, it is assumed that the MS 330 detects an error in the received data "2". In this case, the MS 330 transmits Nack to the RS 320 (2822). The RS 320 transmits to the MS 330, retransmission data "2R" of data "2" corresponding to Nack and transmits Nack to the BTS 310 (2813).

Consequently, the BTS 310 transmits retransmission data "3R" of data "3" to the RS 320. The RS 320 discards retransmission data "3R" received from the BTS 310, and transmits to the MS 330, data "3" that has previously been received from the BTS 310. Thus, when the RS 320 performs retransmission control corresponding to Nack (2822) from the MS 330, the BTS 310 is able to also perform retransmission control to the RS 320.

As described, according to the communication system 300 of the eleventh embodiment, retransmission control is performed independently between the BTS 310 and the RS 320, and between the RS 320 and the MS 330. Furthermore, the RS 320 performs retransmission control to the MS 330 and requests retransmission (transmits Nack) to the BTS 310 when a retransmission request (Nack) is received from the MS 330. Thus, configuration may be such that the BTS 310 also performs retransmission control when the RS 320 performs retransmission control corresponding to Nack from the MS 330.

Therefore, even if retransmission control frequently occurs between the RS 320 and the MS 330, transmission of data between the BTS 310 and the RS 320 may be delayed according to the retransmission. As a result, reduction in throughput because of transmission between the RS 320 and the MS 330 being bottlenecked or buffer overflow at the RS 320 is prevented.

A case where a function of switching amplify and forward (AF) relay in which data is amplified by analog processing to be relayed, and decode and forward (DF) relay in which data is reproduced by digital processing to be relayed is included in the respective embodiments described above is explained.

For example, suppose that the RS 320 has the above function. In this case, both the first route R1 and the second route R2 pass through the RS 320. The RS 320 may be configured to wirelessly relay data by DF when the first route R1 is used and to wirelessly relay data by AF when the second route R2 is used. Thus, the second route R2 is a faster route than the first route R1.

In the fourth embodiment, the eighth embodiment, and the like in which the second route R2 passes through RS, if the RS in the second route R2 has a function of switching AF and DF, the RS in the second route R2 may be configured to wirelessly relay, by AF, data that is retransmitted by the BTS 310. Thus, the second route R2 may be an even fast route.

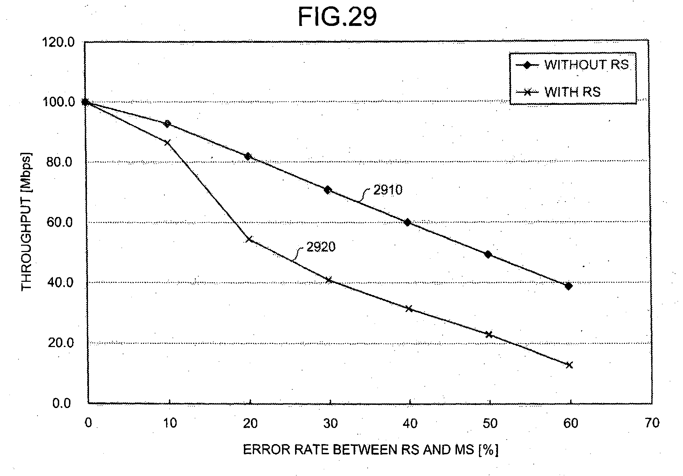

FIG. 29 is a graph depicting throughput of data in the communication system. In FIG. 29, the horizontal axis indicates an error rate [%] between the RS 320 and the MS 330, and the vertical axis indicates throughput [Mbps] of data from the BTS 310 to the MS 330. A throughput characteristic 2910 and a throughput characteristic 2920 are throughput characteristics with respect to the error rate between the RS 320 and the MS 330.

The throughput characteristic 2910 indicates a characteristic in throughput with respect to the error rate when data is transmitted from the BTS 310 to the MS 330 without passing through the RS 320. The throughput characteristic 2920 indicates a characteristic in throughput with respect to the error rate when data is transmitted from the BTS 310 to the MS 330 passing through the RS 320.

As indicated by the throughput characteristic 2910 and the throughput characteristic 2920, when the error rate between the RS 320 and the MS 330 is higher than 10 [%], the throughput characteristic 2920 significantly decreases relative to the throughput characteristic 2910. Therefore, for example, the communication system 300 described in the second to the sixth embodiments and the eighth to the tenth embodiments is effective particularly when the error rate between the RS 320 and the MS 330 is higher than 10 [%].

As explained, according to the retransmission method, the wireless communication apparatus, and the relay station disclosed herein, in communication systems in which multiple wireless routes respectively passing through a different number of relay stations may be used, a wireless route that passes through fewer relay stations than the route used at the first transmission is used when the data is retransmitted. This enables reduction in the delay of data transmission when retransmission processing occurs. For the retransmission processing in the respective embodiments described above, for example, hybrid automatic repeat request (HARQ) may be used.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the scope of the claims.

## Claims

1. A retransmission method in a mobile communication system (300) comprising:
performing a transmission of data from a first wireless communication apparatus (310) to a second wireless communication apparatus (330) through a first route (R1) that passes through at least one relay station (320) by wireless relaying;
(1) upon receipt of a negative acknowledge (Nack) signal from the second wireless communication apparatus, performing a retransmission of the data from the first wireless communication apparatus (310) to the second wireless communication apparatus (330) by retransmitting the data through a second route (R2) that passes through fewer relay stations than the first route or does not pass through any relay station; and
receiving the retransmitted data at the second wireless communication apparatus;
the method further comprising:
when there is an error in the data transmitted through the first route, transmitting from the second wireless communication apparatus to the first wireless communication apparatus the negative acknowledge (Nack) signal through the second route, while transmitting from the second wireless communication apparatus to the at least one relay station an acknowledge (Ack) signal through the first route.

2. The retransmission method according to claim 1, further comprising
transmitting, when there is an error in the data transmitted through the first route, a request signal requesting retransmission of the data that includes the error, the request signal being transmitted by the second wireless communication apparatus to the first wireless communication apparatus through the second route, wherein
the retransmission is performed by the first wireless communication apparatus when the request signal is transmitted by the second wireless communication apparatus.

3. The retransmission method according to claim 1 or 2, further comprising
reporting performed by a relay station, the relay station reporting to an upstream relay station or to the first wireless communication apparatus, the number of wireless relays from the relay station to the second wireless communication apparatus, wherein
the retransmission for the data is performed by the first wireless communication apparatus using a route whose number of wireless relays reported by the relay station is smaller than other routes.

4. The retransmission method according to any of claims 1 to 3, wherein
the performing the transmission includes
performing the transmission using, simultaneously, the first route (R1) and the second route (R2), and further includes
interrupting the transmission that uses the second route to perform the retransmission of the data, the transmission being performed by the first wireless communication apparatus.

5. The retransmission method according to any of claims 1 to 4 further comprising:
writing to a memory, data that is output from an information processing unit, the writing being performed by the first wireless communication apparatus; and
reading the data written to the memory, the reading being performed by the first wireless communication apparatus, wherein
the performing the transmission includes performing the transmission using the read data, and
the performing the retransmission includes
performing the retransmission by reading the data from the memory, and
performing the retransmission for the read data, the retransmission being performed by the first wireless communication apparatus.

6. The retransmission method according to claim 2, wherein
the transmitting of the request signal by the second wireless communication apparatus includes transmitting the request signal to the first wireless communication apparatus through the relay station.

7. The retransmission method according to any of claims 1 to 6, wherein
the retransmission is performed using a route that has a shorter total relay time for relay stations included in the route than the total relay time for relay stations included in the first route.

8. The retransmission method according to claim 7 further comprising:
measuring the time from the transmission until a reply signal for the transmission is received from the second wireless communication apparatus for the first and the second route (R1, R2) of the transmission, the measuring being performed by the first wireless communication apparatus, and
the performing the retransmission includes performing the retransmission using the route out of the first and second route for which the measured time is shorter.

9. The retransmission method according to any of claims 1 to 8, further comprising:
performing, independently, retransmission control between the first wireless communication apparatus and the relay station, and between the relay station and the second wireless communication apparatus, wherein
the relay station, when a retransmission request is received from the second wireless communication apparatus, performs the retransmission control with respect to the second wireless communication apparatus and sends a retransmission request to the first wireless communication apparatus.

10. A wireless communication apparatus (310) in a mobile communication system (300), the wireless communication apparatus comprising:
a transmitting unit (311) for performing a transmission of data from the wireless communication apparatus to another wireless communication apparatus (330) through a first route (R1) that passes through at least one relay station (320) by wireless relaying;
a retransmitting unit (313, 311) for upon receipt of a negative acknowledge (Nack) signal from the second wireless communication apparatus, performing a retransmission of the data from the wireless communication apparatus to the another wireless communication apparatus by retransmitting the data through a second route (R2) that passes through fewer relay stations than the first route or does not pass through any relay station; and;
a receiving unit (312) for receiving the negative acknowledge (Nack) signal through the second route from the second wireless communication apparatus, when there is an error in the data transmitted through the first route, while the second wireless communication apparatus transmits an acknowledge (Ack) signal to the at least one relay station through the first route.

11. The wireless communication apparatus according to claim 10, wherein
the retransmitting unit is further configured to perform retransmission of the data by using a route that has a shorter total relay time for relay stations included in the route than the total relay time for relay stations included in the first route.

12. A relay station (320) in a mobile communication system (300), the relay station comprising:
a relay unit (211) for wirelessly relaying a transmission of data from a first wireless communication apparatus (310) to a second wireless communication apparatus (330) on a first route (R1) which passes through the relay station, wherein the relay unit is further configured not to relay a retransmission of the data from the first wireless communication apparatus to the second wireless communication apparatus on a second route (R2) which does not pass through the relay station; and
a receiving unit (1922) for receiving an acknowledge (Ack) signal through the first route from the second wireless communication apparatus, when there is an error in the data transmitted through the first route, while the second wireless communication apparatus transmits a negative acknowledge (Nack) signal to the first wireless communication apparatus through the second route.

13. The relay station according to claim 12, wherein
the relay unit is further configured to, using a route that has a shorter total relay time for relay stations included in the route than the total relay time for relay stations included in the first route, relay to the second wireless communication apparatus, the data retransmitted from the first wireless communication apparatus.

14. A wireless communication system comprising a wireless communication apparatus of any of claims 10 and 11 and/or a relay station of any of claims 12 and 13.

## Patentansprüche

1. Wiederübertragungsverfahren in einem Mobilkommunikationssystem (300), umfassend:
Durchführen einer Datenübertragung aus einer ersten Funkkommunikationsvorrichtung (310) an eine zweite Funkkommunikationsvorrichtung (330) über eine erste Route (320) durch Funkweiterleitung;
beim Empfangen eines Negativbestätigungs- (Nack)-Signals aus der zweiten Funkkommunikationsvorrichtung, Durchführen einer Wiederübertragung der Daten aus der ersten Funkkommunikationsvorrichtung (310) an die zweite Funkkommunikationsvorrichtung (320) durch Wiederübertragen der Daten über eine zweite Route (R2), die weniger Relaisstationen als die erste Route passiert, oder keine Relaisstation passiert; und
Empfangen der wiederübertragenen Daten an der zweiten Funkkommunikationsvorrichtung;
wobei das Verfahren weiter umfasst:
wenn es einen Fehler bei den über die erste Route übertragenen Daten gibt, Übertragen, aus der zweiten Funkkommunikationsvorrichtung an die erste Funkkommunikationsvorrichtung, des Negativbestätigungs-(Nack)-Signals über die zweite Route, während aus der zweiten Funkkommunikationsvorrichtung an die zumindest eine Relaisstation ein Bestätigungs- (Nack)-Signal über die erste Route übertragen wird.

2. Wiederübertragungsverfahren gemäß Anspruch 1, weiter umfassend:
Übertragen, wenn es einen Fehler bei den über die erste Route übertragenen Daten gibt, eines Anforderungssignal, welches Wiederübertragung der Daten anfordert, die den Fehler enthalten, wobei das Anforderungssignal durch die zweite Funkkommunikationsvorrichtung über die zweite Route an die erste Funkkommunikationsvorrichtung übertragen wird, wobei
die Wiederübertragung durch die erste Funkkommunikationsvorrichtung durchgeführt wird, wenn das Anforderungssignal durch die zweite Funkkommunikationsvorrichtung übertragen wird.

3. Wiederübertragungsverfahren gemäß Anspruch 1 oder 2, weiter umfassend:
durch eine Relaisstation durchgeführtes Berichten, wobei die Relaisstation an eine Stromauf-Relaisstation oder an die erste Funkkommunikationsvorrichtung die Anzahl von Funkrelais ab der Relaisstation bis zur zweiten Funkkommunikationsvorrichtung berichtet, wobei
das Wiederübertragen der Daten durch die erste Funkkommunikationsvorrichtung unter Verwendung einer Route, deren Anzahl von Funkrelais, die durch die Relaisstation berichtet ist, kleiner als andere Routen ist, durchgeführt wird.

4. Wiederübertragungsverfahren gemäß einem der Ansprüche 1 bis 3, wobei
das Durchführen der Übertragung beinhaltet
Durchführen der Übertragung unter simultaner Verwendung der ersten Route (R1) und der zweiten Route (R2), und weiter beinhaltet
Unterbrechen der Übertragung, welche die zweite Route verwendet, um die Wiederübertragung der Daten durchzuführen, wobei die Übertragung durch die erste Funkkommunikationsvorrichtung durchgeführt wird.

5. Wiederübertragungsverfahren gemäß einem der Ansprüche 1 bis 4, weiter umfassend:
Dchreiben von Daten in einen Speicher, welche aus einer Informationsverarbeitungseinheit ausgegeben werden, wobei das Schreiben durch die erste Funkkommunikationsvorrichtung durchgeführt wird; und
Lesen der in den Speicher geschriebenen Daten, wobei das Lesen durch die erste Funkkommunikationsvorrichtung durchgeführt wird, wobei
das Durchführen der Übertragung das Durchführen der Übertragung unter Verwendung der gelesenen Daten beinhaltet;
und
das Durchführen der Wiederübertragung beinhaltet
Durchführen der Wiederübertragung durch Lesen der Daten aus dem Speicher, und
Durchführen der Wiederübertragung für die gelesenen Daten, wobei die Wiederübertragung durch die erste Funkkommunikationsvorrichtung durchgeführt wird.

6. Wiederübertragungsverfahren gemäß Anspruch 2, wobei das Übertragen des Anforderungssignals durch die zweite Funkkommunikationsvorrichtung das Übertragen des Anforderungssignals durch die Relaisstation an die erste Funkkommunikationsvorrichtung beinhaltet.

7. Wiederübertragungsverfahren gemäß einem der Ansprüche 1 bis 6, wobei
die Wiederübertragung unter Verwendung einer Route durchgeführt wird, die eine kürzere Gesamtweiterleitungszeit für Relaisstationen aufweist, die in der Route enthalten sind, als die Gesamtweiterleitungszeit für in der ersten Route enthaltene Relaisstationen.

8. Wiederübertragungsverfahren gemäß Anspruch 7, weiter umfassend:
Messen der Zeit ab der Übertragung, bis ein Antwortsignal für die Übertragung aus der zweiten Funkkommunikationsvorrichtung für die erste und die zweite Route (R1, R2) der Übertragung empfangen wird, wobei die Messung durch die erste Funkkommunikationsvorrichtung durchgeführt wird, und
das Durchführen der Wiederübertragung unter Verwendung der Route von der ersten und zweiten Route, für welche die Messzeit kürzer ist, beinhaltet.

9. Wiederübertragungsverfahren gemäß einem der Ansprüche 1 bis 8, weiter umfassend:
unabhängiges Durchführen von Wiederübertragungssteuerung zwischen der ersten Funkkommunikationsvorrichtung und der Relaisstation und zwischen der Relaisstation und der zweiten Funkkommunikationsvorrichtung, wobei
die Relaisstation, wenn eine Wiederübertragungsanforderung aus der zweiten Funkkommunikationsvorrichtung empfangen wird, die Wiederübertragungssteuerung in Bezug auf eine zweite Funkkommunikationsvorrichtung durchführt und eine Wiederübertragungsanforderung an die erste Funkkommunikationsvorrichtung sendet.

10. Funkkommunikationsvorrichtung (310) in einem Mobilkommunikationssystem (300), wobei die
Funkkommunikationsvorrichtung umfasst:
eine Übertragungseinheit (311) zum Durchführen einer Übertragung von Daten aus der Funkkommunikationsvorrichtung an eine andere Funkkommunikationsvorrichtung (330) über eine erste Route (R1), welche zumindest eine Relaisstation (320) passiert, durch Funkweiterleiten;
eine Wiederübertragungseinheit (313, 311) zum, beim Empfangen eines Negativbestätigungs- (Nack)-Signals aus der zweiten Funkkommunikationsvorrichtung, Durchführen einer Wiederübertragung der Daten aus der Funkkommunikationsvorrichtung an die andere Funkkommunikationsvorrichtung durch Wiederübertragung der Daten über eine zweite Route (R2), welche weniger Relaisstationen als die erste Route passiert oder keine Relaisstation passiert; und
eine Empfangseinheit (312) zum Empfangen des Negativbestätigungs- (Nack)-Signals über die zweite Route aus der zweiten Funkkommunikationsvorrichtung, wenn es einen Fehler bei den über die erste Route übertragenen Daten gibt, während die zweite Funkkommunikationsvorrichtung ein Bestätigungs- (Ack)-Signal an die zumindest eine Relaisstation durch die erste Route sendet.

11. Funkkommunikationsvorrichtung gemäß Anspruch 10, wobei
die Wiederübertragungseinheit weiter konfiguriert ist, eine Wiederübertragung der Daten unter Verwendung einer Route durchzuführen, die eine kürzere Gesamtweiterleitungszeit für Relaisstationen aufweist, die in der Route enthalten sind, als die Gesamtweiterleitungszeit für in der ersten Route enthaltene Relaisstationen.

12. Relaisstation (320) in einem Mobilkommunikationssystem (300), wobei die Relaisstation umfasst:
eine Relaiseinheit (211) zum Funkweiterleiten einer Datenübertragung aus der ersten Funkkommunikationsvorrichtung (310) an eine zweite Funkkommunikationsvorrichtung (330) auf einer ersten Route (R1), die die Relaisstation passiert, wobei die Relaiseinheit weiter konfiguriert ist, eine Wiederübertragung der Daten aus der ersten Funkkommunikationsvorrichtung an die zweite Funkkommunikationsvorrichtung auf einer zweiten Route (R2), welche die Relaisstation nicht passiert, nicht weiterzuleiten; und
eine Empfangseinheit (1922) zum Empfangen eines Bestätiugngs-(Ack)-Signals über die erste Route aus der zweiten Funkkommunikationsvorrichtung, wenn es einen Fehler bei den über die erste Route übertragenen Daten gibt, während die zweite Funkkommunikationsvorrichtung ein Negativbestätigungs-(Nack)-Signal über die zweite Route an die erste Funkkommunikationsvorrichtung überträgt.

13. Relaisstation gemäß Anspruch 12, wobei die Relaiseinheit weiter konfiguriert ist, unter Verwendung einer Route, die eine kürzere Gesamtweiterleitungszeit für in der Route enthaltene Relaisstationen aufweist als die Gesamtweiterleitungszeit für in der ersten Route enthaltene Relaisstationen, an die zweite Funkkommunikationsvorrichtung die aus der ersten Funkkommunikationsvorrichtung wiederübertragenen Daten weiterzuleiten.

14. Funkkommunikationssystem, das eine Funkkommunikationsvorrichtung eines der Ansprüche 10 und 11 und/oder eine Relaisstation eines der Ansprüche 12 und 13 umfasst.

## Revendications

1. Procédé de retransmission dans un système de communication mobile (300) comprenant :
la réalisation d'une transmission de données d'un premier appareil de communication sans fil (310) vers un deuxième appareil de communication sans fil (330) via un premier itinéraire (R1) qui passe par au moins une station de relais (320) par relayage sans fil ;
lors de la réception d'un signal d'accusé de réception négatif (Nack) du deuxième appareil de communication sans fil, réalisation d'une retransmission des données du premier appareil de communication sans fil (310) vers le deuxième appareil de communication sans fil (330) en retransmettant les données via un deuxième itinéraire (R2) qui passe par moins de stations de relais que le premier itinéraire ou ne passe par aucune station de relais ; et
réception des données retransmises au niveau du deuxième appareil de communication sans fil ;
le procédé comprenant en outre :
lorsqu'il y a une erreur dans les données transmises via le premier itinéraire, transmission, du deuxième appareil de communication sans fil vers le premier appareil de communication sans fil, du signal d'accusé de réception négatif (Nack) via le deuxième itinéraire, tout en transmettant, du deuxième appareil de communication sans fil vers l'au moins une station de relais, un signal d'accusé de réception (Ack) via le premier itinéraire.

2. Procédé de retransmission selon la revendication 1, comprenant en outre :
la retransmission, lorsqu'il y a une erreur dans les données transmises via le premier itinéraire, d'un signal de requête demandant la retransmission des données qui comportent l'erreur, le signal de requête étant transmis par le deuxième appareil de communication sans fil vers le premier appareil de communication sans fil via le deuxième itinéraire, dans lequel
la retransmission étant effectuée par le premier appareil de communication sans fil lorsque le signal de requête est transmis par le deuxième appareil de communication sans fil.

3. Procédé de retransmission selon la revendication 1 ou 2, comprenant en outre :
l'établissement d'un rapport effectué par une station de relais, la station de relais rapportant, à une station de relais en amont ou au premier appareil de communication sans fil, le nombre de relais sans fil entre la station de relais et le deuxième appareil de communication sans fil, dans lequel
la retransmission pour les données étant effectuée par le premier appareil de communication sans fil à l'aide d'un itinéraire dont le nombre de relais sans fil rapporté par la station de relais est inférieur à d'autres itinéraires.

4. Procédé de retransmission selon l'une des revendications 1 à 3, dans lequel
la réalisation de la transmission comprend :
la réalisation de transmission à l'aide, simultanément, du premier itinéraire (R1) et du deuxième itinéraire (R2), et comprend en outre
l'interruption de la transmission qui utilise le deuxième itinéraire afin d'effectuer la retransmission des données, la transmission étant effectuée par le premier appareil de communication sans fil.

5. Procédé de retransmission selon l'une des revendications 1 à 4, comprenant en outre :
l'écriture dans une mémoire, de données qui sont envoyées par une unité de traitement d'informations, l'écriture étant effectuée par le premier appareil de communication sans fil ; et
lecture des données écrites dans la mémoire, la lecture étant effectuée par le premier appareil de communication sans fil, dans lequel
la réalisation de la transmission comprenant la réalisation de transmission à l'aide des données lues, et
la réalisation de la retransmission comprenant :
la réalisation de la retransmission par la lecture des données dans la mémoire, et
la réalisation de la retransmission pour les données lues, la retransmission étant effectuée par le premier appareil de communication sans fil.

6. Procédé de retransmission selon la revendication 2, dans lequel
la transmission du signal de requête par le deuxième appareil de communication sans fil comprend la transmission du signal de requête à l'appareil de communication sans fil via la station de relais.

7. Procédé de retransmission selon l'une des revendications 1 à 6, dans lequel
la retransmission est effectuée à l'aide d'un itinéraire qui présente un temps de relais plus court pour les stations de relais incluses dans l'itinéraire que le temps de relais total pour les stations de relais incluses dans le premier itinéraire.

8. Procédé de retransmission selon la revendication 7, comprenant en outre :
la mesure du temps entre la transmission et la réception d'un signal de réponse pour la transmission de la part du deuxième appareil de communication sans fil pour le premier et le deuxième itinéraire (R1, R2) de la transmission, la mesure étant effectuée par le premier appareil de communication sans fil, et
la réalisation de la retransmission comprend la réalisation de la retransmission à l'aide d'un itinéraire choisi entre le premier et le deuxième itinéraire, pour lequel le temps mesuré est le plus court.

9. Procédé de retransmission selon l'une des revendications 1 à 8, comprenant en outre :
la réalisation, de manière indépendante, d'un contrôle de transmission entre le premier appareil de communication sans fil et la station de relais, et entre la station de relais et le deuxième appareil de communication sans fil, dans lequel
lorsqu'une requête de retransmission est reçue de la part du deuxième appareil de communication sans fil, la station de relais effectuant le contrôle de retransmission par rapport au deuxième appareil de communication sans fil et envoyant une requête de retransmission au premier appareil de communication sans fil.

10. Appareil de communication sans fil (310) dans un système de communication mobile (300), l'appareil de communication sans fil comprenant :
une unité de transmission (311) pour la réalisation d'une transmission de données entre l'appareil de communication sans fil et un autre appareil de communication sans fil (330) via un premier itinéraire (R1) qui passe par au moins une station de relais (320) par relayage sans fil ;
une unité de retransmission (313, 311) pour réaliser, lors de la réception d'un signal d'accusé de réception négatif (Nack) provenant du deuxième appareil de communication sans fil, une retransmission des données provenant de l'appareil de communication sans fil vers l'autre appareil de communication sans fil en retransmettant les données via un deuxième itinéraire (R2) qui passe par moins de stations de relais que le premier itinéraire ou ne passe par aucune station de relais ; et
une unité de réception (312) pour recevoir le signal d'accusé de réception (Nack) via le deuxième itinéraire de la part du deuxième appareil de communication sans fil lorsqu'il y a une erreur dans les données transmises via le premier itinéraire, tandis que le deuxième appareil de communication sans fil transmet un signal d'accusé de réception (Ack) à l'au moins une station de relais via le premier itinéraire.

11. Appareil de communication sans fil selon la revendication 10, dans lequel
l'unité de retransmission est en outre configurée pour réaliser une retransmission des données à l'aide d'un itinéraire qui présente un temps de relais pour les stations de relais incluses dans l'itinéraire plus court que le temps de relais total pour les stations de relais incluses dans le premier itinéraire.

12. Station de relais (320) dans un système de communication mobile (300), la station de relais comprenant :
une unité de relais (211) pour le relayage sans fil d'une transmission de données entre un premier appareil de communication sans fil (310) et un deuxième appareil de communication sans fil (330) sur un premier itinéraire (R1) qui passe par la station de relais, l'unité de relais étant en outre configurée pour ne pas relayer une retransmission des données du premier appareil de communication sans fil vers le deuxième appareil de communication sans fil sur un deuxième itinéraire (R2) qui ne passe pas par la station de relais ; et
une unité de réception (1922) pour recevoir un signal d'accusé de réception (Ack) via le premier itinéraire de la part du deuxième appareil de communication sans fil, lorsqu'il y a une erreur dans les données transmises via le premier itinéraire, tandis que le deuxième appareil de communication sans fil transmet un signal d'accusé de réception négatif (Nack) au premier appareil de communication sans fil via le deuxième itinéraire.

13. Station de relais selon la revendication 12, dans lequel l'unité de relais est en outre configurée pour relayer, à l'aide d'un itinéraire qui présente un temps de relais total pour les stations de relais incluses dans l'itinéraire plus court que le temps de relais total pour les stations de relais incluses dans le premier itinéraire, vers le deuxième appareil de communication sans fil, les données retransmises par le premier appareil de communication sans fil.

14. Système de communication sans fil comprenant un appareil de communication sans fil selon l'une des revendications 10 et 11 et/ou une station de relais selon l'une des revendications 12 et 13.
